# EUROPEAN PATENT APPLICATION

(11) **EP 4 528 194 A1**
(43) Date of publication of application: **26.03.2025**
(21) Application number: 23807704.4
(22) Date of filing: 18.05.2023
(51) Int. Cl.: F26B 5/06, F26B 25/00

(54) **PARTICLE PRODUCTION DEVICE AND METHOD FOR PRODUCING FROZEN PARTICLES**

(30) Priority: 19.05.2022 JP 2022082477; 13.01.2023 JP 2023003947
(71) Applicant: Kobelco Eco-Solutions Co., Ltd, Kobe-shi, Hyogo 651-0072 (JP)
(72) Inventor: OGAWA, Tomohiro, Kobe-shi, Hyogo 651-0072 (JP); KISHI, Yusuke, Kobe-shi, Hyogo 651-0072 (JP); KUNITANI, Ryosuke, Settsu-shi, Osaka 566-0022 (JP); OCHI, Shunsuke, Settsu-shi, Osaka 566-0022 (JP)
(74) Representative: Daub, Thomas
(86) International application number: PCT/JP2023/018647
(87) International publication number: WO 2023/224103

(57) **Abstract**

The present invention provides a particle manufacturing device and a manufacturing method for frozen particles capable of quickly manufacturing frozen particles while preventing clogging of a nozzle due to freezing. The present invention provides a particle manufacturing device including: a freezing chamber in which frozen particles obtained by freezing an object to be treated containing moisture in a particulate form are accommodated; an ultrasonic nozzle configured to discharge the object to be treated after or before being frozen in a particulate form into the freezing chamber; and a decompression device configured to decompress the freezing chamber, in which the moisture is evaporated due to decompression, and the frozen particles are cooled and frozen by the evaporation of the moisture.

## Description

### TECHNICAL FIELD

### (CROSS-REFERENCE TO RELATED APPLICATIONS)

The present application claims the benefit of Japanese Patent Application No. 2022-82477 and Japanese Patent Application No. 2023-3947, the contents of which are incorporated by reference herein.

The present invention relates to a particle manufacturing device and a particle manufacturing method, and more particularly to a particle manufacturing device for manufacturing frozen particles and a manufacturing method for frozen particles.

### BACKGROUND ART

In the related art, freeze-dried foods are known as long-term storage foods or the like. The freeze-dried foods are prepared by bringing cooked rice, vegetables, and the like into a frozen state once and removing moisture under a decompression environment. In addition, liquid such as fruit juice is also freeze-dried (for example, Patent Literature 1 below). Furthermore, not only food and drink but also various other things are used as objects to be freeze-dried (objects to be treated).

Patent Literature 1 below describes that a freeze-dried portion accommodates frozen particles and is vacuumed in a sealed state to prepare freeze-dried particles. The Patent Literature describes a method of accommodating frozen particles in the freeze-dried portion, in which the freeze-dried portion is open upward, a vertical cylindrical freeze-granulation chamber maintained at a low temperature is arranged in an upper portion of the freeze-dried portion, a liquid is sprayed from an upper end of the freeze-granulation chamber through a nozzle, the sprayed liquid particles are frozen in the freeze-granulation chamber, and the frozen particles are dropped into the freeze-dried portion.

### CITATION LIST

### PATENT LITERATURE

Patent Literature 1: WO 2019/175954

### SUMMARY OF INVENTION

### TECHNICAL PROBLEM

In a method in the related art, it takes time until the liquid particles discharged from the nozzle become frozen, and thus the freeze-granulation chamber needs to have a certain height, making equipment large-scale. It is conceivable to lower the temperature of the freeze-granulation chamber, which may cause the nozzle to be frozen and clogged. Therefore, a particle manufacturing device for manufacturing frozen particles is required to quickly freeze particles discharged from a nozzle, but such a requirement is not satisfied. Therefore, an object of the present invention is to provide a particle manufacturing device and a manufacturing method for frozen particles capable of quickly manufacturing frozen particles while preventing clogging of a nozzle due to freezing.

### SOLUTION TO PROBLEM

The present invention for solving the above problems provides a particle manufacturing device including:
a freezing chamber configured to accommodate frozen particles obtained by freezing an object to be treated containing moisture in a particulate form;
a decompression device configured to decompress the freezing chamber; and
an ultrasonic nozzle configured to discharge the object to be treated in a particulate form into the freezing chamber decompressed by the decompression device, in which
the frozen particles are manufactured by freezing the object to be treated as a result of evaporation of the moisture from the object to be treated under a decompression environment.

The present invention for solving the above problems provides a method for manufacturing frozen particles containing:
forming an object to be treated containing moisture into a particulate form by an ultrasonic nozzle; and
manufacturing frozen particles, in which the object to be treated is frozen in a particle form, by freezing the object to be treated before the forming of the object to be treated into the
particulate form by the ultrasonic nozzle or after the forming of the object to be treated into the particulate form by the ultrasonic nozzle, wherein
the freezing of the object to be treated is achieved by cooling the object to be treated, the cooling being caused by evaporating the moisture.

### BRIEF DESCRIPTION OF DRAWINGS

[FIG. 1] FIG. 1 is a schematic diagram illustrating a structure of a particle manufacturing device according to a first embodiment.
[FIG. 2A] FIG. 2A is a schematic diagram illustrating a structure of an ultrasonic nozzle.
[FIG. 2B] FIG. 2B is a schematic diagram illustrating one usage state of the ultrasonic nozzle.
[FIG. 2C] FIG. 2C is a schematic diagram illustrating a structure of another ultrasonic nozzle.
[FIG. 2D] FIG. 2D is a schematic diagram illustrating a structure of another ultrasonic nozzle.
[FIG. 3A] FIG. 3A is a schematic diagram illustrating a structure of a particle manufacturing device according to a second embodiment.
[FIG. 3B] FIG. 3B is a schematic plan view illustrating an arrangement of ultrasonic nozzles in the particle manufacturing device of the second embodiment (view taken in an arrow B direction in FIG. 3A).
[FIG. 3C] FIG. 3C is a schematic plan view illustrating an arrangement of the ultrasonic nozzles different from that in FIG. 3B.
[FIG. 3D] FIG. 3D is a schematic plan view illustrating a state in which an object to be treated is discharged from the ultrasonic nozzles in a direction different from that in FIG. 3C.
[FIG. 3E] FIG. 3E is a schematic perspective view illustrating a preferred arrangement of the ultrasonic nozzles.
[FIG. 4A] FIG. 4A is a schematic front view illustrating a state in which the object to be treated is discharged from the ultrasonic nozzle.
[FIG. 4B] FIG. 4B is a schematic front view illustrating a state in which the object to be treated is discharged from the ultrasonic nozzle.
[FIG. 5] FIG. 5 is a schematic diagram illustrating a structure of a particle manufacturing device according to a third embodiment.
[FIG. 6] FIG. 6 is a schematic diagram illustrating a structure of a particle manufacturing device according to a fourth embodiment.

### DESCRIPTION OF EMBODIMENTS

Hereinafter, an embodiment of the present invention will be described with reference to the drawings. In a particle manufacturing device in the related art, frozen particles are formed by discharging a liquid in a particulate form into a cooled space. In the present embodiment, an object to be treated containing moisture is supplied to a decompressed environment. At this time, the moisture is evaporated to freeze the object to be treated. That is, in the present embodiment, the object to be treated is frozen using evaporation heat. The freezing of the object to be treated by the evaporation heat can be performed more quickly than in the method in the related art. An ultrasonic nozzle is used for discharging the object to be treated, and thus clogging due to the freezing of the object to be treated at the nozzle can be prevented in the present embodiment.

First, a particle manufacturing device will be described. The particle manufacturing device according to the present embodiment is a device for manufacturing frozen particles formed by freezing a liquid object to be treated. The frozen particles in the present embodiment may return to room temperature and constant pressure (for example, 23°C and 1 atm) and return to a liquid state in a state in which a frozen state is released. The particle manufacturing device of the present invention is used not only to form the frozen particles that return to a liquid state at room temperature, but also to form freeze-dried particles maintaining a solid state by drying such frozen particles even in a state in which the frozen state is released.

The liquid object to be treated may be an object containing only liquid or a slurry containing liquid and solid particles. In the present embodiment, a liquid material is described as an example of the object to be treated, but the object to be treated as the frozen particles is not limited to the liquid material, and may be solid or semi-solid materials such as jelly or paste-like materials as long as it can be granulated by ultrasonic vibration.

(First Embodiment)

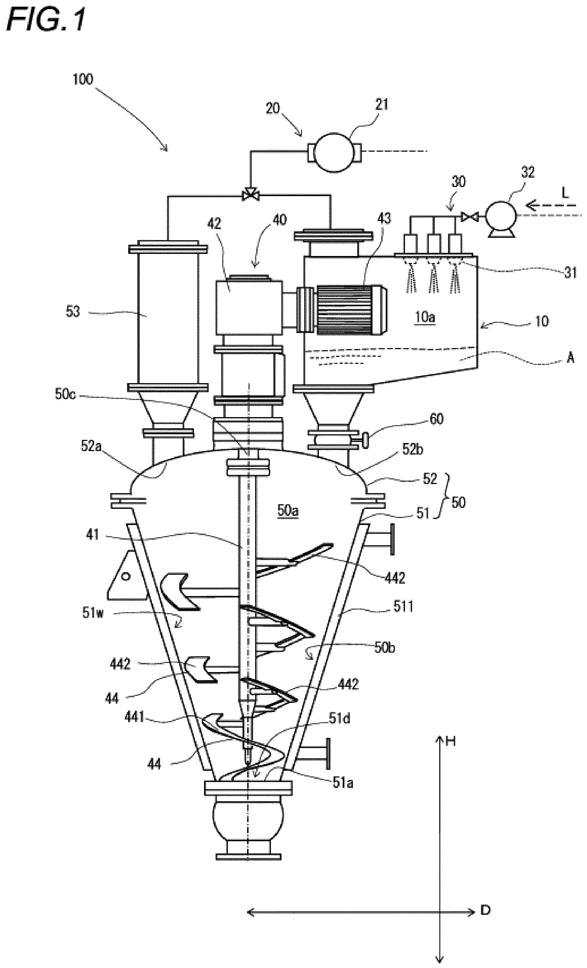

FIG. 1 illustrates a particle manufacturing device 100 according to a first embodiment, and the particle manufacturing device 100 according to the first embodiment includes a freezing chamber 10 in which a liquid object to be treated (hereinafter, also referred to as "raw material liquid L") is frozen, a decompression device 20 that decompresses the freezing chamber 10, and a discharge device 30 that discharges the raw material liquid in a particulate form into the freezing chamber 10. In the freezing chamber 10 of the present embodiment, frozen particles A having a lower moisture content than the object to be treated (raw material liquid L) are formed. For example, the discharge device 30 of the present embodiment may be configured to discharge the raw material liquid into the freezing chamber 10 without freezing the raw material liquid. The discharge device 30 of the present embodiment may be configured to discharge the raw material liquid into the freezing chamber 10 after freezing the raw material liquid. That is, the discharge device 30 of the present embodiment may be configured to freeze at least a part of the raw material liquid into particles and then discharge them to the freezing chamber 10.

In the freezing chamber 10, the discharged raw material liquid L has a fine particulate form, moisture W is evaporated from each of the particles, and the frozen particles A having smaller moisture W than the raw material liquid L are manufactured by evaporation heat due to the evaporation of the moisture W. In the present embodiment, frozen particles obtained by freezing the raw material liquid L are discharged from the discharge device 30 into the freezing chamber 10, and the moisture W is further evaporated from the frozen particles A in the freezing chamber 10. That is, the freezing chamber 10 of the present embodiment is configured to accommodate the frozen particles obtained by freezing the raw material liquid L in a particulate form.

The freezing chamber 10 has an accommodation space 10a for accommodating the frozen particles A. The particle manufacturing device 100 is configured to not only maintain the accommodation space 10a in a sealed state, but also adjust the accommodation space 10a to a predetermined decompression state (vacuum degree) by exhausting the accommodation space 10a with the decompression device 20.

The freezing chamber 10 may adjust a temperature of a wall surface with which the frozen particles A come into contact. For example, the freezing chamber 10 may adjust the temperature of the wall surface to a low temperature so that the frozen particles A can be easily maintained in a frozen state. The temperature of the wall surface can be adjusted by attaching a Peltier element or the like. The temperature of the wall surface can be adjusted by using, for example, a method of causing a heat medium to flow through a jacket portion formed by making a wall into a double structure.

The decompression device 20 of the present embodiment includes a vacuum pump 21 for performing the evacuation. The vacuum pump 21 may be a general type such as a reciprocating pump, a rotary pump, and a diffusion pump.

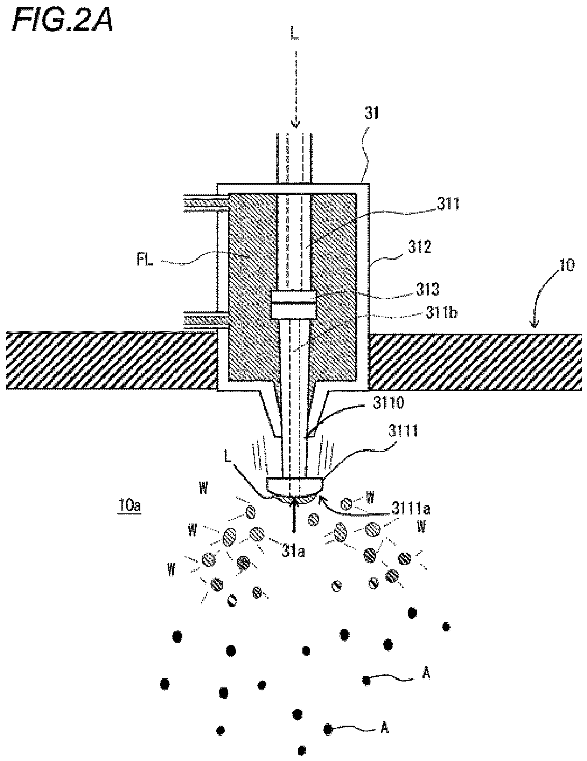

The discharge device 30 of the present embodiment includes ultrasonic nozzles 31 for discharging the object to be treated into the accommodation space 10a of the freezing chamber 10, and a pump 32 for sending the raw material liquid L to the ultrasonic nozzles 31. As illustrated in FIG. 2A, the ultrasonic nozzle 31 has a discharge port 31a for discharging the object to be treated. The pump 32 can be a commonly used pump, for example, a reciprocating pump such as a piston pump, a diaphragm pump, and a plunger pump, or a positive displacement pump such as a gear pump, a vane pump, and a screw pump.

The discharge of the object to be treated by the discharge device 30 may be such that the object to be treated is discharged forcefully, or such that the object to be treated is discharged slowly. The discharge of the object to be treated by the discharge device 30 may be such that the object to be treated is discharged in a fine mist form, or may be such that the object to be treated is discharged in a large particulate form.

In a nozzle in the related art in which a liquid is formed into a particulate form by discharging the liquid at a high speed through a narrow flow passage, the freezing is likely to occur in the flow passage. On the other hand, the ultrasonic nozzle 31 can discharge the object to be treated in a fine particulate form by applying ultrasonic vibration, and thus it is not always necessary to provide such a narrow flow passage, and when such a narrow flow passage is provided, the clogging of the nozzle can also be prevented because a frozen object within the flow passage is easily broken down by ultrasonic vibration. Therefore, in the present embodiment using the ultrasonic nozzle, even if the object to be treated is not in a liquid state but is a solid object, the object to be treated can be discharged in a particulate form into the accommodation space. Therefore, as will be described in detail later, in the ultrasonic nozzle 31 of the present embodiment, the frozen particles A can be formed with the ultrasonic nozzle 31 and then discharged toward the freezing chamber 10. That is, the ultrasonic nozzle 31 of the present embodiment may freeze the object to be treated on its inside or its surface.

The ultrasonic nozzle 31 according to the present embodiment may be configured to discharge the object to be treated in a fine particulate form by applying ultrasonic vibration to the object to be treated before or after being frozen. The ultrasonic nozzle 31 may be other than one illustrated in FIG. 2A.

The ultrasonic nozzle 31 illustrated in FIG. 2A includes a cylindrical nozzle main body 311 whose distal end portion is open as the discharge port 31a, a housing 312 that covers the nozzle main body 311, and an ultrasonic vibrator 313 for vibrating the nozzle main body 311. The ultrasonic vibrator 313 of the present embodiment may be, for example, an electrostrictive element or a magnetostrictive element. In the ultrasonic nozzle 31 of the present embodiment, a frequency of the vibration of the ultrasonic vibrator 313 can be adjusted. The frequency of the ultrasonic vibrator 313 can be varied, for example, between 20 kHz and 130 kHz.

The nozzle main body 311 includes a cylindrical portion 3110 constituting a flow passage 311b of the raw material liquid L. In the nozzle main body 311, an end of the flow passage 311b is open as the discharge port 31a. The nozzle main body 311 further includes a flange portion 3111 extending outward from an end edge portion of the cylindrical portion 3110 that defines the discharge port 31a. The raw material liquid L that reaches the discharge port 31a through the flow passage 311b becomes a fine particulate form due to the vibration of the distal end portion of the nozzle main body 311 and is discharged from the discharge port 31a.

The nozzle main body 311 includes the flange portion 3111 having a surface extending outward in a radial direction from the discharge port 31a. The nozzle main body 311 has the discharge port 31a at a position corresponding to a center of the flange portion 3111. The nozzle main body 311 is configured to discharge the raw material liquid L after temporarily holding the raw material liquid L on a surface 3111a of the flange portion 3111, instead of directly discharging the raw material liquid L from the discharge port 31a into the accommodation space 10a.

The nozzle main body 311 of the present embodiment extends from the housing 312 in a rod shape, and a base end side thereof is a fixed end fixed to the housing 312, while the open distal end portion of the discharge port 31a is a free end, and thus a vibration direction of the distal end portion is a planar direction of the flange portion 3111. Therefore, the raw material liquid L coming out of the discharge port 31a temporarily moves laterally along the surface of the flange portion 3111. Then, the raw material liquid L temporarily remains on the surface of the flange portion 3111 and then is discharged in a particulate form into the accommodation space 10a. That is, the flange portion 3111 of the ultrasonic nozzle 31 of the present embodiment is a retention portion in which the object to be treated (raw material liquid L) is retained. In the present embodiment, the retention portion (flange portion 3111) has a surface 311a exposed in the accommodation space 10a. The retention portion (flange portion 3111) in the present embodiment is configured so that the object to be treated (raw material liquid L) discharged from the discharge port 31a can be temporarily retained at the surface 311a.

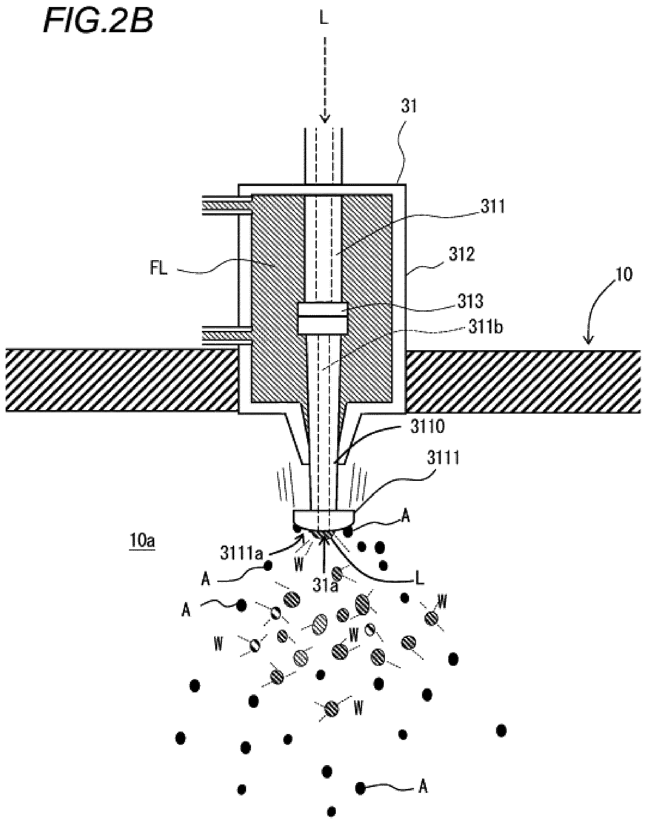

In the present embodiment, the ultrasonic nozzle 31 has the above structure, and thus as illustrated in FIG. 2B, a part or all of the raw material liquid L can be frozen on the surface 3111a of the flange portion 3111. That is, in the present embodiment, at least a part of the frozen particles A can be formed in the ultrasonic nozzle 31. In order to freeze the raw material liquid L before being discharged from the ultrasonic nozzle 31, a temperature of the raw material liquid L to be supplied to the ultrasonic nozzle 31 may be lowered. In addition, the raw material liquid L can be frozen before being discharged from the ultrasonic nozzle 31 by further lowering an air pressure in the accommodation space 10a. As described above, the ultrasonic nozzle of the present embodiment is configured to freeze the object to be treated (raw material liquid L) on the surface 311a of the retention portion (flange portion 3111) to form the frozen particles A, and discharge the formed frozen particles A from the surface 311a.

The temperature of the raw material liquid L is lowered before the raw material liquid L is discharged because the raw material liquid L temporarily remains on the surface of the flange portion 3111 though a retention time in the flange portion 3111 is affected by a surface tension or the like. The ultrasonic nozzle 31 can discharge the raw material liquid L in a form of small particles. As described above, in the present embodiment, the particles discharged from the ultrasonic nozzle 31 may be only particles before being frozen, or may include particles before being frozen and the frozen particles A. In the present embodiment, the particles discharged from the ultrasonic nozzle 31 may be only the frozen particles A. The frozen particles A have a smaller moisture content and are lighter than the particles before being frozen. In addition, the particles before being frozen are also reduced in weight by being refined. Therefore, the particles of the discharged raw material liquid L fall slowly. In the present embodiment in which the particles of the raw material liquid L whose temperature is lowered due to the retention in the flange portion 3111 can be slowly dropped, a dropping distance required for the discharged particles to become frozen particles having a desired temperature is shortened, and a device size can be made compact. An advantage obtained by using the ultrasonic nozzle 31 and an advantage obtained by providing the retention portion in the ultrasonic nozzle 31 in order to freeze and then discharge the object to be treated are also common to a particle manufacturing device 101 of a second embodiment, a particle manufacturing device 102 of a third embodiment, and a particle manufacturing device 103 of a fourth embodiment, which will be described later.

In the present embodiment, the frequency of the vibration of the ultrasonic vibrator 313 can be adjusted, and thus a size of the particles of the raw material liquid L to be discharged from the discharge port 31a can be changed. That is, in the present embodiment, the size of the particles can be made fine by increasing the frequency (shortening a wavelength) of the vibration of the ultrasonic vibrator 313, and it is possible to form the particles whose moisture is likely to be evaporated and which have a large ratio surface area. The particles of the raw material liquid L having a large ratio surface area are discharged into the accommodation space 10a of the freezing chamber 10 in a decompression state, and become the frozen particles A when the moisture W is evaporated from surfaces of the particles, and the temperature of the particles is lowered due to the evaporation heat of the moisture W.

The particle manufacturing device 100 of the present embodiment can form the frozen particles A before being discharged from the ultrasonic nozzle 31. In addition, the particle manufacturing device 100 of the present embodiment can also quickly freeze the particles after being discharged when the particles before being frozen are discharged from the ultrasonic nozzle 31. The frozen particles A have lower adhesion than the particles before being frozen. Therefore, in the present embodiment, it is possible to prevent the frozen particles A from adhering to the wall surface or the like of the freezing chamber 10 that defines the accommodation space 10a or to reduce the formation of agglomerates in which a plurality of frozen particles A are collected. Such advantages are also common to the particle manufacturing device 101 of the second embodiment, the particle manufacturing device 102 of the third embodiment, and the particle manufacturing device 103 of the fourth embodiment, which will be described later.

In a general spraying device, a liquid is forcefully discharged from a small nozzle hole, whereby the liquid is made into a fine mist form. Therefore, in the general spraying device, a passage resistance of the liquid in the nozzle is large, and a pressure of 0.1 MPa or more is applied to the liquid. On the other hand, in the present embodiment, the nozzle main body 311 having the discharge port 31a vibrates to change the raw material liquid L to be discharged from the discharge port 31a into fine particles. In the present embodiment in which the raw material liquid L is refined by a kinetic energy caused by the vibration of the nozzle main body 311, a pressure of the raw material liquid L immediately before being supplied to the ultrasonic nozzle 31 can be set to 50 kPa or less, and a load of the pump 32 can be greatly reduced.

In the present embodiment, the discharge port 31a is open in the decompressed accommodation space 10a, and the raw material liquid L is suctioned from an accommodation space 10a side, and thus a supply pressure of the raw material liquid L to the ultrasonic nozzle 31 can be further reduced. The pressure may be 40 kPa or less, or may be 30 kPa or less. The pressure is, for example, 1 kPa or more.

The discharge port 31a of the ultrasonic nozzle 31 is open to the freezing chamber 10 in a decompression state. Therefore, a space inside the nozzle main body 311 constituting the flow passage 311b communicates with the accommodation space 10a via the discharge port 31a. In other words, a space inside the ultrasonic nozzle 31 is decompressed by the decompression device 20 together with the freezing chamber 10. Therefore, when an opening area of the discharge port 31a (cross-sectional area of the flow passage 311b) is increased, a negative pressure is easily applied to the flow passage 311b upstream of the discharge port 31a. In this situation, when a situation occurs in which the supply of the raw material liquid L is restricted and the raw material liquid L is less likely to be discharged from the discharge port 31a, the moisture is likely to be evaporated from the raw material liquid L at a location deeper than the discharge port 31a. When the cross-sectional area of the flow passage 311b is large, water vapor generated due to the evaporation of moisture is likely to be discharged into the freezing chamber 10 through the discharge port 31a. Therefore, the flow passage 311b is closed by a frozen object generated by the freezing of the raw material liquid L at a location deeper than the discharge port 31a.

In the present embodiment, even when the raw material liquid L is frozen to block the flow passage 311b in the middle of the flow passage 311b, the frozen object can be crushed due to the vibration of the nozzle main body 311, and the frozen particles A obtained by the crushing of the frozen object can be discharged from the discharge port 31a. In addition, even if the frozen object that blocks the flow passage 311b is not crushed, frictional heat can be generated due to the vibration at an interface between the wall surface of the flow passage 311b and the frozen object, and a surface layer portion of the frozen object can be liquefied, and thus the frozen object can be moved toward the discharge port 31a by using a suction force from the accommodation space 10a side, and the frozen object can be granulated to form the frozen particles A when discharged from the discharge port 31a.

A pressure in the accommodation space 10a is usually determined based on a balance between an amount of moisture evaporation from the discharged raw material liquid L and an exhaust amount by the vacuum pump 21. In the ultrasonic nozzle 31 of the present embodiment in which a necessity of applying pressure to the raw material liquid L is low, the cross-sectional area of the flow passage 311b immediately before the discharge port 31a can be made larger than that of a general nozzle as necessary, and it is possible to prevent the occurrence of time variation in a discharge amount of the raw material liquid L.

When the raw material liquid L is, for example, a material containing dietary fibers such as fruit juice or a slurry containing fine particles, in a case in which the flow passage is narrow, the dietary fibers or the fine particles may remain in the flow passage and may become obstacles that inhibit the flow of the liquid. When such obstacles occur, an amount of liquid discharged is reduced. In addition, the amount of liquid discharged may be restored when the obstacles are accidentally removed. This may result in a large fluctuation range of the amount of liquid discharged. When the amount of liquid discharged into the decompression space fluctuates, a pressure balance of the space may be lost resulting in a large pressure fluctuation. On the other hand, in the present embodiment, it is possible to prevent such problems from occurring.

When the amount of liquid discharged fluctuates, a size of liquid particles also changes, when a large amount of liquid is discharged, a vacuum degree decreases (absolute pressure increases), which may result in insufficient freezing of the liquid, and the already formed frozen particles may aggregate with insufficiently frozen liquid. In the present embodiment in which an amount of raw material liquid L to be discharged into the accommodation space 10a is less likely to fluctuate, such a problem is less likely to occur, and the frozen particles having a uniform size can be prepared.

In the ultrasonic nozzle 31 of the present embodiment, the clogging due to the freezing can be prevented from the viewpoint of easily securing a large cross-sectional area of the flow passage 31b immediately before the discharge port 31a. However, there is a possibility that the clogging due to the freezing may occur due to an unexpected factor, and thus it is desirable to provide a mechanism that can quickly eliminate the clogging and restore the discharge of the raw material liquid L in preparation for the occurrence of clogging.

The housing 312 in the present embodiment has a cylindrical shape having an inner diameter larger than an outer diameter of the nozzle main body 311, and covers the nozzle main body 311 so as to provide a space between the nozzle main body 311 and the housing 312. The ultrasonic nozzle 31 in the present embodiment can cause a heat medium FL (antifreeze or the like) to flow through the space, and the temperature of the nozzle main body 311 can be adjusted as necessary.

In the present embodiment, the nozzle main body 311 can be heated by the heat medium FL as described above, and thus the clogging at the time of freezing can be eliminated. In the particle manufacturing device 100 of the present embodiment capable of discharging the raw material liquid L in a stable amount, it is possible to grasp that the nozzle main body 311 is clogged by monitoring the pressure of the accommodation space 10a. Therefore, the particle manufacturing device 100 of the present embodiment may include a pressure measuring instrument (not illustrated) for measuring the pressure of the accommodation space 10a. The ultrasonic nozzle 31 may be configured to adjust the temperature of the nozzle main body 311 based on a measurement result of the pressure measuring instrument. The particle manufacturing device 100 of the present embodiment may be configured to heat the ultrasonic nozzle 31 when the pressure of the accommodation space 10a measured by the pressure measuring instrument reaches a determined reference value.

The mechanism for eliminating the clogging of the ultrasonic nozzle 31 may be other than those described above. As the mechanism for eliminating the clogging of the ultrasonic nozzle 31, for example, it is conceivable to provide a cleaning nozzle for removing a frozen object that causes clogging by blowing gas toward the discharge port 31a of the ultrasonic nozzle 31. Purification gas blown from the cleaning nozzle to the ultrasonic nozzle 31 can be, for example, air or nitrogen. Such purification gas may be supplied to the cleaning nozzle at room temperature, may be heated and supplied, or may be cooled and supplied. The blowing of the purification gas for solving the clogging may be continuous or intermittent. When the purification gas is continuously blown, a blowing pressure may be constant, or the blowing pressure may be repeatedly increased and decreased.

The purification gas may be blown from the outside toward the discharge port 31a or may be supplied to the discharge port 31a through the flow passage 311b inside the nozzle. That is, the supply of the raw material liquid L may be stopped and the purification gas may be supplied instead of the supply of the raw material liquid L at a time when it is detected that the pressure of the raw material liquid L in the ultrasonic nozzle 31 is increasing and the discharge port 31a or the flow passage 311b is beginning to be blocked by the frozen object or the like, and the frozen object or the like may be removed with the purification gas. The switching of the supply and stop of the purification gas or the like may be performed based on the reference value determined for the pressure of the accommodation space 10a.

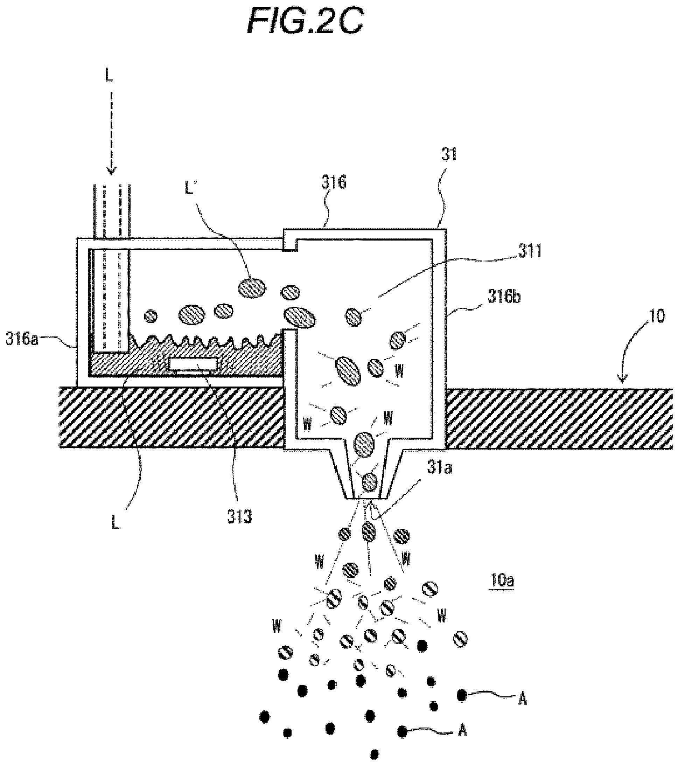

The ultrasonic nozzle 31 in the present embodiment may be as illustrated in FIG. 2C. The ultrasonic nozzle 31 illustrated in FIG. 2C includes a chamber 316 in which a discharge port 31a is open. The ultrasonic nozzle 31 illustrated in FIG. 2C includes a first chamber 316a having an internal space for storing the raw material liquid L, applying ultrasonic vibration, and generating a granular raw material liquid L' due to the ultrasonic vibration, and a second chamber 316b having an internal space communicating with the internal space of the first chamber 316a. In the ultrasonic nozzle 31, the internal space of the second chamber 316b adjacent to the accommodation space 10a communicates with the accommodation space 10a via the discharge port 31a.

The ultrasonic nozzle 31 is configured to supply the raw material liquid L to the first chamber 316a. The ultrasonic nozzle 31 has a liquid reservoir provided in the first chamber 316a for storing the raw material liquid L such that the raw material liquid L always occupies a part of the internal space of the first chamber 316a and a liquid level of the raw material liquid L is formed within the chamber. The ultrasonic nozzle 31 includes the ultrasonic vibrator 313 for applying ultrasonic vibration to the raw material liquid L stored in the liquid reservoir. The ultrasonic nozzle 31 is configured to generate a differential pressure between the accommodation space 10a and the space in the chamber 316 by evaporating the moisture W from the particles of the raw material liquid L protruding from the liquid level of the raw material liquid L stored in the liquid reservoir, and is configured so that the particles of the raw material liquid L into the accommodation space 10a through the second chamber 316b and the discharge port 31a can be discharged by using the differential pressure.

If it is insufficient to transfer the particles of the raw material liquid L generated in the chamber 316 to the accommodation space 10a by only the differential pressure, for example, an air flow generation mechanism for forming an air flow toward the accommodation space 10a in the chamber 316 may be provided in the ultrasonic nozzle 31.

In the ultrasonic nozzle 31, the moisture is evaporated and the cooled raw material liquid L is discharged from the discharge port 31a at an early stage, and thus the frozen particles A can be formed quickly in the accommodation space 10a. In the ultrasonic nozzle 31 illustrated in FIG. 2C, it is preferable to provide a mechanism for adjusting a temperature based on a reference value so as to prevent the freezing in the liquid reservoir. It is preferable that the particle manufacturing device 100 of the present embodiment further includes a temperature adjustment device that heats or cools the object to be treated to be discharged from the ultrasonic nozzle 31 while the object to be treated passes through the ultrasonic nozzle, and it is preferable that the temperature adjustment device can adjust a temperature based on the reference value as shown below.

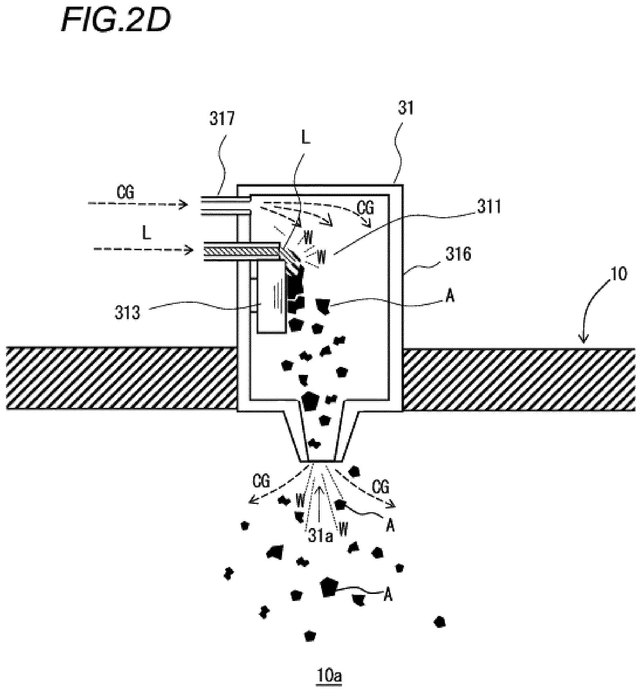

The ultrasonic nozzle 31 in the present embodiment may be as illustrated in FIG. 2D. The ultrasonic nozzle 31 illustrated in FIG. 2D is common to the ultrasonic nozzle 31 illustrated in FIG. 2A or FIG. 2C in that the ultrasonic nozzle 31 evaporates the moisture W from the raw material liquid L and cools the raw material liquid L to a frozen state using the evaporation heat of the moisture W. The ultrasonic nozzle 31 illustrated in FIG. 2D is common to the ultrasonic nozzle 31 illustrated in FIG. 2C in that the chamber 316 in which a discharge port 31a is open is provided. The ultrasonic nozzle 31 is common to the ultrasonic nozzle 31 illustrated in FIG. 2C in that the accommodation space 10a and the chamber 316 communicate with each other through the discharge port 31a, and the chamber 316 can be decompressed by the decompression device 20, in that the raw material liquid L can be supplied into the chamber 316, and in that the moisture W can be evaporated from the raw material liquid L in the chamber 316 to reduce a vacuum degree on a chamber 316 side to be lower than that of the accommodation space 10a (to increase an air pressure in the chamber 316 to be higher than that of the accommodation space 10a), thereby forming a flow of water vapor from the chamber 316 toward the accommodation space 10a.

The ultrasonic nozzle 31 illustrated in FIG. 2D is a nozzle in which the raw material liquid L is frozen inside the ultrasonic nozzle 31 (inside the chamber 316). The ultrasonic nozzle 31 illustrated in FIG. 2D has the ultrasonic vibrator 313 arranged in the chamber 316, and is configured to transmit the vibration of the ultrasonic vibrator 313 to a frozen object frozen in the chamber 316. The ultrasonic nozzle 31 illustrated in FIG. 2D is configured to form the frozen particles A inside the ultrasonic nozzle 31 by crushing the frozen object through the vibration.

The frozen particles A dissipated into the chamber 316 are discharged into the freezing chamber 10 together with the air flow carrying the moisture W (water vapor) discharged from the discharge port 31a. The ultrasonic nozzle 31 illustrated in FIG. 2D is configured to introduce a carrier gas CG such as nitrogen or air into the chamber 316 in order to bias the discharge of the frozen particles A from the chamber 316. Specifically, the ultrasonic nozzle 31 illustrated in FIG. 2D includes an air supply pipe 317 open in the chamber 316. The air supply pipe 317 is provided so that the carrier gas CG can be introduced into the chamber 316. With such a configuration, the ultrasonic nozzle 31 illustrated in FIG. 2D can adjust a decompression state (degree of negative pressure acting on the raw material liquid) in the chamber 316. The ultrasonic nozzle 31 illustrated in FIG. 2D can use the carrier gas CG to be supplied by the air supply pipe 317 as a purification gas when the discharge port 31a is clogged.

When the purification gas is supplied into the chamber 316 from the air supply pipe 317 for the purpose of eliminating the clogging of the discharge port 31a, a timing of starting the supply or the like can be appropriately set based on a reference value predetermined for the pressure of the accommodation space 10a similarly to the ultrasonic nozzles illustrated in FIGS. 2A and 2C.

The reference value may be, for example, an absolute value (P2: P2 < P1) set separately from a setting value (P1) for normal operation. The reference value may be a change amount in the pressure in the accommodation space 10a over time.

In the former case, the reference value (P2) may be, for example, a value smaller than the setting value (P1) for normal operation by 50 Pa or more. The reference value (P2) may be a value smaller than the setting value (P1) by 80 Pa or more, or may be a value smaller than the setting value (P1) by 100 Pa or more.

In the latter case, a moving average value of the pressure change over time in the accommodation space 10a may be calculated, and a reference value (ΔPa (Pa/min)) for a decrease amount (ΔPa = (moving average value before X minutes - current moving average value)/X minutes) in a predetermined time (for example, within one minute) of the moving average value may be set. The reference value (ΔPa) can be, for example, a value of 50 Pa/min or more. The reference value may be 80 Pa or more, or 100 Pa or more.

The heat medium FL can be used not only for heating but also for cooling the nozzle main body 311 or the raw material liquid L, and when the temperature of the raw material liquid L is high and it takes time to freeze the raw material liquid L after being discharged, the raw material liquid L can be cooled via the nozzle main body 311 to easily form frozen particles.

The particle manufacturing device 100 of the present embodiment may include a liquid temperature measuring instrument (not illustrated) for measuring the temperature of the raw material liquid L. The ultrasonic nozzle 31 may be configured to adjust the temperature of the nozzle main body 311 based on a measurement result of the liquid temperature measuring instrument.

When the raw material liquid L is discharged into the freezing chamber 10 in a liquid state from the ultrasonic nozzle 31 as illustrated in FIG. 2A, the freezing of the raw material liquid L depends on the vacuum degree of the freezing chamber 10, but can occur generally in the vicinity of the discharge port 31a. When the freezing chamber 10 is decompressed excessively, the raw material liquid L is frozen before being separated from the nozzle main body 311 and becoming a particulate form, and in the ultrasonic nozzle 31, the nozzle main body 311 performs ultrasonic vibration at the discharge port 31a, and thus even when the raw material liquid L is frozen, the raw material liquid L is crushed by the vibration of the nozzle main body 311. Therefore, in the ultrasonic nozzle 31, the discharge port 31a is prevented from being clogged resulting in a state in which no frozen particles A are formed. In the present embodiment, it is not necessary to strictly control the vacuum degree of the freezing chamber 10 in order to prevent the clogging in the ultrasonic nozzle 31, and the frozen particles A can be easily prepared.

In a method of discharging a raw material liquid in an extremely low temperature environment and forming frozen particles, the cooling due to sensible heat is mainly performed, and thus as a temperature of the discharged liquid decreases, a temperature difference with an ambient temperature becomes smaller and a cooling rate decreases, whereas in the present embodiment, the cooling of the raw material liquid mainly includes latent heat of vaporization of water, and thus the raw material liquid is cooled rapidly immediately after being discharged. For example, the evaporation heat of water at 25°C is about 600 kcal/kg, and if a specific heat of the raw material liquid L is 1 cal/K similar to that of water, the frozen particles are formed by lowering the temperature of about 30°C by only evaporating 5% of moisture. In the present embodiment, the ultrasonic nozzle is less likely to be clogged due to freezing, and thus the interior of the freezing chamber 10 can be kept at a high vacuum to rapidly freeze the raw material liquid. Therefore, in the present embodiment, the frozen particles are rapidly formed, and the finally formed freeze-dried particles are also efficiently prepared.

In the present embodiment, the particles of the raw material liquid are frozen into solid frozen particles as described above. A speed at which water is discharged from the frozen particles is usually slower than a discharge speed of water from the particles of the raw material liquid before being frozen. The frozen particles at a temperature close to a freezing point may melt and cause other frozen particles to adhere to each other, and may also cause agglomerates to occur. Further, the frozen particles at a temperature close to the freezing point tend to adhere to the wall surface of the freezing chamber 10 or equipment inside the chamber. Therefore, in the present embodiment, it is desirable to reduce the temperature of the frozen particles more quickly.

At the time of freezing, the raw material liquid may contain an organic solvent in order to reduce the temperature of the frozen particles. The raw material liquid of the present embodiment contains moisture. A boiling point of the organic solvent is lower than that of water, and thus the organic solvent can be quickly discharged from particles of the raw material liquid when the particles are frozen. In addition, when a freezing point of the organic solvent is lower than that of water, a discharge rate of the organic solvent from the particles is less likely to decrease even in a temperature range in which a discharge rate of water decreases when a raw material liquid that does not contain the organic solvent is frozen. Therefore, when the organic solvent having a boiling point and a freezing point lower than those of water is contained in the raw material liquid, excellent cooling performance due to the evaporation heat is exhibited to a lower temperature range, and the frozen particles that are less likely to melt can be formed. The raw material liquid containing an organic solvent is less likely to be solidified, and thus the freezing in the ultrasonic nozzle 31 is less likely to occur. Therefore, when the raw material liquid containing an organic solvent is used, an amount of the raw material liquid to be discharged through the ultrasonic nozzle 31 per unit time is stabilized, and the frozen particles having a uniform particle size can be obtained. The organic solvent may be, for example, the organic solvent having a boiling point and a freezing point lower than those of water at a constant pressure (1 atm).

The organic solvent as described above may be, for example, a hydrophilic organic solvent having a solubility in water of 10g/100g or more at room temperature and constant pressure (for example, 23°C and 1 atm), or may be a hydrophobic organic solvent having a solubility lower than that of the hydrophilic organic solvent. Examples of the hydrophobic organic solvent include hexane, heptane, dichloromethane, 1,2-dichloroethane, trichloromethane, tetrachloroethane, triethyl amine, diethyl ether, ethyl acetate, and methyl t-butyl ether. Examples of the hydrophilic organic solvent include tetrahydrofuran, methanol, ethanol, 1-propanol, 2-propanol, 2-butanol, acetone, and acetonitrile.

The organic solvent contained in the raw material liquid is preferably a hydrophilic organic solvent, more preferably an alcohol such as ethanol, or acetonitrile, and still more preferably any one or both of ethanol and acetonitrile.

A content of the organic solvent in the raw material liquid can be, for example, 0.1% by mass or more. The content of the organic solvent may be 0.5% by mass or more, 1% by mass or more, 2% by mass or more, or 5% by mass or more. The content of the organic solvent in the raw material liquid can be, for example, 50% by mass or less. The content of the organic solvent in the raw material liquid may be 40% by mass or less or 30% by mass or less.

The content of the organic solvent in the raw material liquid can be, for example, 0.1 parts by mass or more when an amount of water contained in the raw material liquid is 100 parts by mass. The content of the organic solvent may be 0.5 parts by mass or more, 1 part by mass or more, 2 parts by mass or more, or 5 parts by mass or more, with respect to 100 parts by mass of water. The content of the organic solvent in the raw material liquid can be, for example, 100 parts by mass or less with respect to 100 parts by mass of water. The content of the organic solvent in the raw material liquid may be 50 parts by mass or less, 40 parts by mass or less, or 30 parts by mass or less, with respect to 100 parts by mass of water. The raw material liquid containing an organic solvent may be used in other embodiments (second embodiment, third embodiment, and fourth embodiment) to be described later. The advantages obtained by using the raw material liquid containing an organic solvent are also exhibited in the other embodiments.

In the present embodiment, a plurality of ultrasonic nozzles 31 is provided at one freezing chamber 10. Therefore, even if one ultrasonic nozzle 31 is clogged, the frozen particles A can be continuously manufactured by the other ultrasonic nozzles 31. In addition, in the present embodiment, the raw material liquid L to be discharged from one pump 32 is distributed to the plurality of ultrasonic nozzles 31, and thus when one ultrasonic nozzle 31 is clogged, a flow rate of the raw material liquid L increases in the other ultrasonic nozzles 31, and it is possible to prevent the other ultrasonic nozzles 31 following the one ultrasonic nozzle 31 from being clogged. Furthermore, in the present embodiment, the ultrasonic vibrator 313 is arranged in front of the discharge port 31a, and thus the raw material liquid L is heated by the heat generated from the ultrasonic vibrator 313 immediately before being discharged from the discharge port 31a. Therefore, even when the ultrasonic nozzle 31 is frozen and clogged once, the raw material liquid L rises in temperature inside the nozzle main body 311 in the ultrasonic nozzle 31. Then, in the ultrasonic nozzle 31, the temperature decrease due to the evaporation heat stops due to the clogging. Therefore, the ultrasonic nozzle 31 can eliminate the clogging for a short time even when the clogging due to the freezing occurs once.

The particle manufacturing device 100 of the present embodiment includes a stirring device 40 for removing moisture from the frozen particles A while heating and stirring the frozen particles A under a decompression environment. The particle manufacturing device 100 of the present embodiment further includes a decompression drying chamber 50. The decompression drying chamber 50 can be decompressed by the decompression device 20 for decompressing the freezing chamber 10 or a decompression device different from the decompression device 20. In the present embodiment, the freezing chamber 10 and the decompression drying chamber 50 are decompressed by one decompression device 20.

When the raw material liquid containing an organic solvent is used, the organic solvent may be recovered in a path (exhaust path) for decompressing the freezing chamber 10 or the decompression drying chamber 50 by exhausting the freezing chamber 10 or the decompression drying chamber 50. A recovery device (not illustrated) for recovering an organic solvent may be a condenser for freezing and recovering an organic solvent. Specifically, for example, the exhaust path may be provided with the condenser including a heat exchanger capable of cooling gas to be discharged from the freezing chamber 10 or the decompression drying chamber 50 to a temperature equal to or lower than the freezing point of the organic solvent. When the organic solvent is hydrophilic, a cooling temperature of the heat exchanger does not need to be equal to or lower than the freezing point of the organic solvent, and by providing a heat exchanger capable of adjusting a temperature to below a freezing point of a mixed liquid containing water and an organic solvent, the organic solvent contained in the exhaust gas can be frozen together with water and adhered to a surface of the heat exchanger. The organic solvent can recover an adhering matter in a frozen state or after melting the same.

The decompression drying chamber 50 is used to dry the frozen particles A to form freeze-dried particles. The decompression drying chamber 50 has an accommodation space 50a capable of receiving the frozen particles A manufactured in the freezing chamber 10. The decompression drying chamber 50 is located below the freezing chamber 10 and is connected to the freezing chamber 10 in an up-down direction. The decompression drying chamber 50 is connected to the freezing chamber 10 via an opening and closing device 60, and is configured so that the accommodation space 50a communicates with the accommodation space 10a of the freezing chamber 10 when the opening and closing device 60 is in an open state. When the opening and closing device 60 is in a closed state, the accommodation space 50a is in a sealed state, and the decompression drying chamber 50 can be decompressed to a predetermined vacuum degree by the decompression device 20.

The stirring device 40 in the particle manufacturing device 100 of the present embodiment is configured to stir the frozen particles A transferred from the freezing chamber 10 to the decompression drying chamber 50. The stirring device 40 in the present embodiment is provided to stir the frozen particles A in the decompression drying chamber 50.

The decompression drying chamber 50 includes a vertical cylindrical main body portion 51 and a lid portion 52 closing an upper opening of the main body portion 51. The main body portion 51 is decreased in diameter toward a bottom portion 51d, and an entire shape of an internal space is conical. In other words, the main body portion 51 of the present embodiment has a side wall surface 51w that is increased outwardly in diameter upward from an outer peripheral edge of the bottom portion 51d defining a lower end of the internal space. The main body portion 51 of the present embodiment itself has a conical shape.

The decompression drying chamber 50 is provided in the particle manufacturing device 100 such that a center axis 51c of the main body portion 51 is in a vertical direction. That is, a height direction H of the decompression drying chamber 50 in the present embodiment is a direction in which the center axis 51c extends. A radial direction D of the decompression drying chamber 50 in the present embodiment means a horizontal direction passing through the center axis 51c.

The decompression drying chamber 50 has two openings formed in the lid portion 52. One opening is an exhaust port 52a, and the other opening is a supply port 52b of the frozen particles A. A filter unit 53 is connected above the exhaust port 52a. The decompression drying chamber 50 is configured to be exhausted via the filter unit 53 when the accommodation space 50a is exhausted by the decompression device 20. The opening and closing device 60 is connected above the supply port 52b. The decompression drying chamber 50 is configured such that the frozen particles A falling from the freezing chamber 10 due to an action of gravity by bringing the opening and closing device 60 into an open state are accommodated in the main body portion 51 through the supply port 52b. In the present embodiment, the freezing chamber 10 may be provided with a filter unit, and the filter unit may be provided in the middle of the exhaust path from the decompression drying chamber 50 or the freezing chamber 10 to the decompression device 20.

The main body portion 51 is a double wall except for both end portions in the height direction H, and has a jacket portion 511 through which a heat medium can flow. That is, the decompression drying chamber 50 of the present embodiment is provided with a heat transfer surface 50b for heating or cooling an accommodated object in the main body portion 51, and a temperature of the accommodated frozen particles A can be adjusted. The bottom portion 51d of the main body portion 51 is provided with a discharge port 51a for discharging the freeze-dried particles obtained by drying the frozen particles A in a frozen state.

The exhaust port 52a and the supply port 52b are separately arranged on left and right sides with a center portion of the lid portion 52 interposed therebetween. A rotation shaft 41 of the stirring device 40 is inserted into the center portion of the lid portion 52. An upper end portion of the rotation shaft 41 extends above the lid portion 52 and is accommodated in a gear box 42 arranged above the lid portion 52. The rotation shaft 41 passes through the lid portion 52 and extends downward to pass through a central portion of the accommodation space 50a. That is, the rotation shaft 41 extends in the vertical direction along the center axis 51c of the main body portion 51 having a conical shape. A lower end portion of the rotation shaft 41 is not connected to a bottom of the main body portion 51, and is located slightly above the bottom of the main body portion 51 as a free end.

The stirring device 40 includes a rotation machine 43 for rotating gears of the gear box 42 so that the rotation shaft 41 rotates around an axis by a driving force of the rotation machine 43. The stirring device 40 includes the rotation shaft 41 as a rotation body for rotating in the decompression drying chamber 50 to stir the frozen particles A, and a stirring blade 44 fixed to the rotation shaft 41. The stirring device 40 includes a helical ribbon blade 441 rotating at a lower end portion of the main body portion 51 and a plurality of paddle blades 442 rotating at a central portion in the height direction of the main body portion 51. The stirring device 40 is configured to stir the frozen particles A transferred from the freezing chamber 10 and accommodated in the accommodation space 50a by the helical ribbon blade 441 or the paddle blades 442.

In the stirring device 40 of the present embodiment, the rotation shaft 41 extends along an axial center when the rotation body is rotated, and the rotation body only rotates. The rotation body may be a scraper that circulates in the decompression drying chamber 50 along the heat transfer surface 50b of the decompression drying chamber 50. That is, a rotational motion of the rotation body in the decompression drying chamber 50 may be rotation about the axial center or revolution about the axial center. In addition, the stirring device 40 may circulate along a wall of the decompression drying chamber 50 while rotating a rotation shaft to which a stirring blade is attached, or may include a rotation body capable of rotating by a combination of revolution and rotation.

In the particle manufacturing device 100 of the present embodiment, the moisture removal from the raw material liquid L for forming the freeze-dried particles can be performed in two stages, that is, the freezing chamber 10 and the decompression drying chamber 50, and drying conditions in the freezing chamber 10 and drying conditions in the decompression drying chamber 50 can be adjusted separately.

When the freezing chamber 10 is excessively decompressed, the ultrasonic nozzle 31 may be clogged, but there is no such concern in the decompression drying chamber 50, and thus the frozen particles A can be dried at a higher vacuum degree in the decompression drying chamber 50 than in the freezing chamber 10, and the moisture can be removed from the frozen particles A by sublimation. In addition, the drying of the frozen particles A can be promoted by raising a temperature of an inner wall surface of the main body portion 51 to heat the frozen particles A. Therefore, the freeze-dried particles obtained by being dried in the decompression drying chamber 50 may have a moisture content significantly lower than that of the frozen particles A obtained by being frozen in the freezing chamber 10. In addition, the stirring is performed by the stirring blade 44 in the decompression drying chamber 50, and thus moisture removal from the frozen particles A is promoted.

In the particle manufacturing device 100 of the present embodiment, the helical ribbon blade 441 or the paddle blades 442 move in the accommodation space 50a so as to scrape the frozen particles A from the heat transfer surface 50b during the rotation of the rotation shaft 41. Therefore, in the particle manufacturing device 100 of the present embodiment, the further drying of the frozen particles A is promoted, and a dry state of the obtained freeze-dried particles can be made relatively uniform. In the particle manufacturing device 100 of the present embodiment, the rotation shaft 41 or the stirring blade 44 may also be controlled in temperature so that the above effects can be more remarkably exhibited.

In a method for manufacturing frozen particles using the particle manufacturing device 100 of the present embodiment, the frozen particles obtained by freezing the raw material liquid L in a particulate form are manufactured by executing a step of decompressing the raw material liquid L which is an object to be treated containing moisture, a step of cooling and freezing the raw material liquid L by evaporation of the moisture, and a step of forming the raw material liquid L after being frozen or the raw material liquid L before being frozen in a particulate form by an ultrasonic nozzle.

In one aspect of the invention applied to the method for manufacturing frozen particles, the raw material liquid L, which is a liquid object to be treated containing moisture, is discharged from the ultrasonic nozzle 31 into the accommodation space 10a of the decompressed freezing chamber 10, and the raw material liquid L is frozen due to the evaporation of the moisture to form the frozen particles in the accommodation space 10a. In another aspect of the invention applied to the method for manufacturing frozen particles, the raw material liquid L is supplied to the ultrasonic nozzle 31 whose internal space is in a decompression state, and the raw material liquid L is decompressed and frozen on the inside or the surface of the ultrasonic nozzle 31. In the method for manufacturing frozen particles, the raw material liquid L is formed into a particulate form by ultrasonic vibration on the inside or the surface of the ultrasonic nozzle 31 to form the frozen particles A, and the formed frozen particles A are discharged from the ultrasonic nozzle 31 into the freezing chamber 10.

In the method for manufacturing frozen particles using the particle manufacturing device 100 of the present embodiment, freeze-dried particles are manufactured by executing a step of drying the frozen particles A obtained by freezing under the decompression in the decompression drying chamber 50 under a decompression environment, and in the drying step, the frozen particles A are stirred within the accommodation space 50a decompressed as described above.

The freeze-dried particles are preferably dried to such an extent that the particles become sufficiently dried solids at room temperature (for example, 23°C), and the frozen particles A may not be in a solid state at room temperature, for example, may be in a paste state (semi-solid state) at room temperature, or may be in a dry state enough to return to liquid. In particular, the frozen particles A are scheduled to be dried, and thus the moisture may be removed to such an extent that the raw material liquid L becomes a concentrated liquid at room temperature.

The freeze-dried particles are prepared, for example, such that the moisture content is 5% by mass or less. The moisture content of the freeze-dried particles may be 4% by mass or less, or 3% by mass or less. The moisture content of the freeze-dried particles can be determined, for example, by dividing a change in mass when the freeze-dried particles are dried for 2 hours in a gear oven at 105°C by an original mass of the freeze-dried particles.

When the frozen particles A are manufactured, first, the opening and closing device 60 is brought into a closed state, and the freezing chamber 10 is evacuated by the vacuum pump 21, whereby the accommodation space 10a is decompressed to atmospheric pressure or less. The raw material liquid L may be cooled in advance so as to be easily frozen in the freezing chamber 10, for example, to a temperature of 0°C to 15°C.

The freezing chamber 10 in which the frozen particles A are manufactured is adjusted such that the accommodation space 10a has a pressure (absolute pressure) of 100 Pa to 1000 Pa when the raw material liquid L is discharged, for example. It is preferable that the accommodation space 10a of the freezing chamber 10 is maintained within the above range until the discharge of the predetermined amount of raw material liquid L is completed and a predetermined amount of frozen particles A is stored in the freezing chamber 10. A lower pressure in the accommodation space 10a is advantageous for freezing. The pressure is preferably 800 Pa or less, more preferably 600 Pa or less, and still more preferably 400 Pa or less. On the other hand, when the pressure is excessively low, the ultrasonic nozzle 31 may be clogged. Therefore, the pressure is preferably 150 Pa or more, and more preferably 200 Pa or more.

The pressure in the accommodation space 10a does not need to be constant from the start to the completion of the manufacture of the frozen particles A. For example, the pressure may be varied within a range that does not cause the size of the frozen particles A to vary excessively. During the period from the start to the completion of the manufacture of the frozen particles, for example, a pressure difference may be provided such that a difference from a minimum pressure to a maximum pressure is 10 Pa or more and 100 Pa or less, and the pressure may be repeatedly increased and decreased. Accordingly, the nozzle main body 311 can be prevented from being continuously and strongly cooled, and the frozen particles can be manufactured while preventing the clogging of the ultrasonic nozzle 31.

When a predetermined amount of frozen particles is stored in the freezing chamber 10, the discharge of the raw material liquid L is stopped, the opening and closing device is switched from a closed state to an open state, and the frozen particles A are transferred from the freezing chamber 10 to the decompression drying chamber 50. The transferred frozen particles A are stirred while being slowly heated in a decompression state in the decompression drying chamber 50 to remove the moisture. The heating of the frozen particles A can be performed, for example, by gradually increasing a temperature of the heat medium flowing through a jacket. The decompression drying chamber 50 is adjusted such that the accommodation space 50a has a pressure (absolute pressure) of 1 Pa to 100 Pa when the frozen particles A are dried while being stirred. The accommodation space 50a is adjusted to a predetermined temperature in a range of, for example, -40°C to 40°C by the jacket portion 511 arranged on a wall surface. The pressure of the accommodation space 50a or the temperature of the wall surface may be started before or after the transfer of the frozen particles A.

The decompression drying chamber 50 may be evacuated together when the freezing chamber 10 is evacuated by the vacuum pump 21. While the frozen particles A are dried in the decompression drying chamber 50 to form the freeze-dried particles, the frozen particles A of a next batch may be manufactured in the freezing chamber 10. That is, in the present embodiment, the frozen particles A may be manufactured in a batch manner, in which a drying step is performed in which the raw material liquid L, which is a liquid object to be treated containing moisture, is discharged from the ultrasonic nozzle 31 into a decompressed first space, the frozen particles A are formed in the first space by freezing the discharged raw material liquid L due to the evaporation of the moisture, and then the frozen particles A are transferred to a second space different from the first space and are dried in the second space. The frozen particles A of the next batch may be prepared in the first space during the drying step is being performed. The drying of the frozen particles A may be started after a plurality of batches of frozen particles A are accommodated in the decompression drying chamber 50.

The method for manufacturing frozen particles using the particle manufacturing device 100 of the present embodiment includes the drying step of drying the frozen particles A obtained by freezing through the discharge from the ultrasonic nozzle 31 in the decompression drying chamber 50 to manufacture the freeze-dried particles, and the drying step includes stirring the frozen particles A in the decompressed accommodation space 50a. Therefore, in the present embodiment, sufficiently dried freeze-dried particles can be easily obtained.

In the particle manufacturing device 100 of the present embodiment, an aspect in which the stirring device 40 is provided in the decompression drying chamber 50 is illustrated, and for example, the freezing chamber 10 may also be provided with a stirring device similar to the decompression drying chamber 50 or a stirring device different from the decompression drying chamber 50, which stirs the frozen particles A to prevent the formation of the agglomerates in which the plurality of frozen particles A are collected. In addition, in a case in which the wall surface of the freezing chamber 10 is cooled to cool the frozen particles A, a cooling effect may be exerted on a larger number of frozen particles A by stirring the frozen particles A. In the particle manufacturing device 100 or the method for manufacturing frozen particles according to the present embodiment, various modifications may be appropriately made in addition to such matters. Specific examples of the particle manufacturing device 100 or the method for manufacturing frozen particles described above can be appropriately adopted in the particle manufacturing device or the method for manufacturing frozen particles according to the following embodiments. Therefore, the detailed description related to the characteristics and the like exhibited by a device or a device use method may not be repeated as follows.

(Second Embodiment)

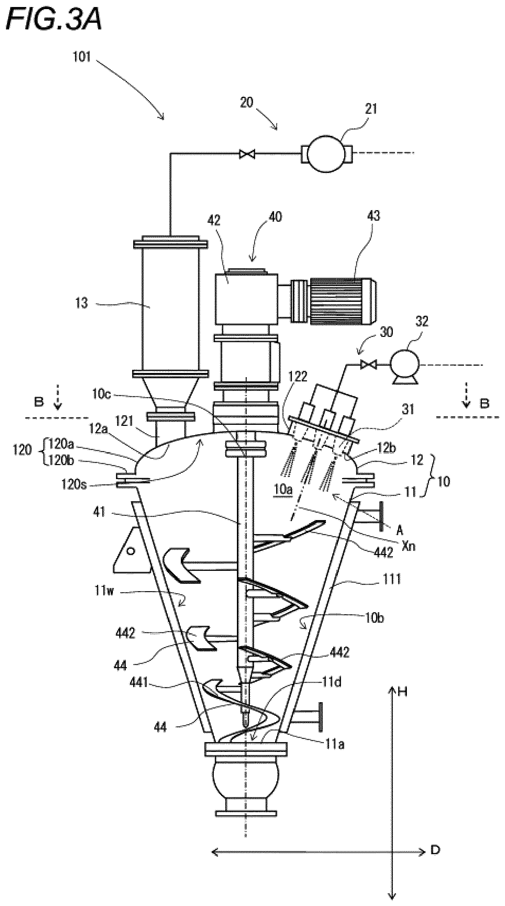

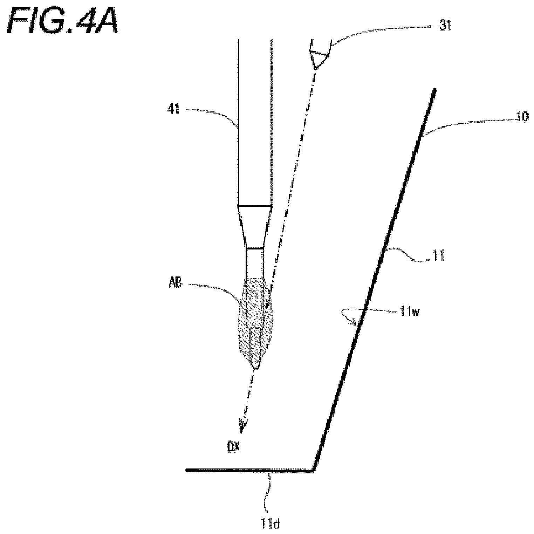

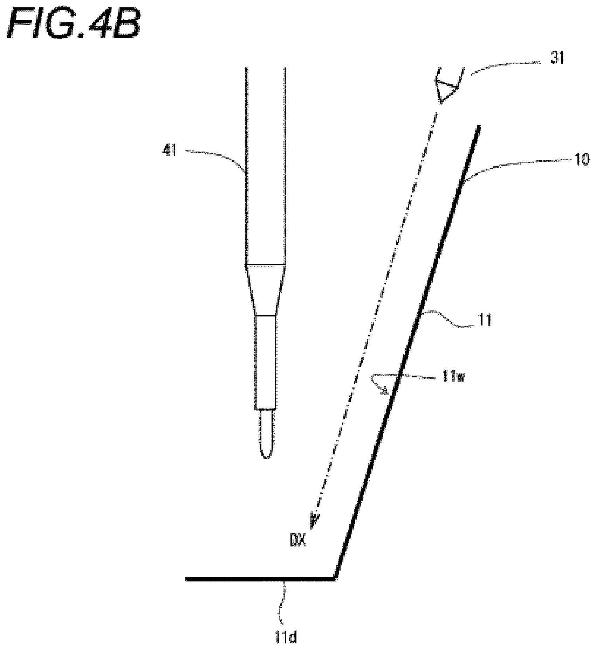

Various modifications may be made to the particle manufacturing device 100 of the above example. A particle manufacturing device according to a second embodiment will be described below with reference to FIGS. 3A to 3D, 4A, and 4B.

In the particle manufacturing device 100 of the first embodiment, the freezing chamber 10 and the decompression drying chamber 50 are separate chambers, whereas in the second embodiment, the freezing chamber 10 is also used as the decompression drying chamber 50, the freezing chamber 10 of the second embodiment is configured not only to form the frozen particles A from the raw material liquid L, but also to dry the formed frozen particles in a decompression state to form the freeze-dried particles. That is, the particle manufacturing device 101 of the second embodiment is different from the particle manufacturing device 100 of the first embodiment in that the decompression drying chamber 50 of the first embodiment is used as the freezing chamber 10 and both the freezing and the drying are performed in the freezing chamber 10.

The particle manufacturing device 101 of the second embodiment uses the decompression drying chamber 50 of the first embodiment as the freezing chamber 10, and thus the freezing chamber 10 has the same shape as the decompression drying chamber 50 in the first embodiment. That is, the freezing chamber 10 includes a main body portion 11 having a vertically long conical shape and a lid portion 12 closing an upper opening of the main body portion 11. The lid portion 12 is provided with an exhaust port 12a. The main body portion 11 is the same as the decompression drying chamber 50 of the first embodiment in that the main body portion 11 has a side wall surface 11w standing outward from a bottom portion 11d thereof and an internal space having a conical shape.

The lid portion 12 of the particle manufacturing device 101 of the second embodiment has the same shape as the lid portion 52 of the decompression drying chamber 50 of the first embodiment. The lid portion 12 has a lid main body 120 that covers the upper opening of the main body portion 11. The lid main body 120 is provided with two openings, and a first opening is an exhaust port 12a for performing exhaust through a filter unit 13 similar to the exhaust port 52a of the first embodiment. A second opening is a supply port 12b for supplying particles formed by the ultrasonic nozzle 31 to the accommodation space 10a.

The lid portion 12 of the present embodiment includes two cylindrical bodies (first cylindrical body 121 and second cylindrical body 122) extending upward from the lid main body 120. A lower end portion of the first cylindrical body 121 serves as the exhaust port 12a and is used for connection to the filter unit 13. A lower end portion of the second cylindrical body 122 serves as the supply port 12b and is used for fixing the ultrasonic nozzle 31.

The lid main body 120 of the present embodiment has a circular plate shape when viewed from above. The lid main body 120 has a circular plate shape larger than the upper opening of the main body portion 11. The lid main body 120 has a dome shape when viewed from the horizontal direction. The lid main body 120 includes a dome portion 120a bulging upward and an outer edge portion 120b extending outward from an outer peripheral edge of the dome portion 120a. The dome portion 120a of the lid main body 120 has a shape protruding upward from the outer edge portion 120b when the lid portion 12 is viewed from the horizontal direction. The dome portion 120a has a shape that becomes higher from the outer edge portion 120b toward a center portion of the lid main body 120. The lid main body 120 is attached to the main body portion 11 by bringing the outer edge portion 120b into contact with an upper end portion of the main body portion 11 from above.

The first cylindrical body 121 and the second cylindrical body 122 are separately arranged on left and right sides of the lid main body 120. In the example illustrated in FIG. 3A, the first cylindrical body 121 is provided on the left side of the lid main body 120, and the second cylindrical body 122 is provided on the right side of the lid main body 120. The first cylindrical body 121 and the second cylindrical body 122 extend upward from the dome portion 120a, respectively. Therefore, the exhaust port 12a and the supply port 12b each are provided in the middle from a center of the lid portion 12 to the outer edge portion 120b.

An upper end of the accommodation space 10a in the present embodiment is defined by a lower surface of the lid portion 12 (lower surface 120s of the dome portion 120a). The ultrasonic nozzle 31 in the present embodiment protrudes inward from the lower surface 120s of the dome portion 120a. That is, the distal end portion of the ultrasonic nozzle 31 protrudes from the supply port 12b located at a lower end edge of the second cylindrical body 122 and enters the accommodation space 10a.

The accommodation space 10a in the present embodiment has a circular shape when cut along a horizontal plane. An area of a circular region is largest when the horizontal plane is set to pass through a portion in which the main body portion 11 and the lid portion 12 are in contact with each other. That is, a dimension of the accommodation space 10a in the radial direction D is maximum at the portion in which the main body portion 11 and the lid portion 12 are in contact with each other.

The ultrasonic nozzle 31 in the present embodiment is located above a location at which the accommodation space 10a has a maximum diameter, and a discharge direction of the object to be treated is downward. When a virtual axis Xn extending from the ultrasonic nozzle 31 in the discharge direction of the object to be treated is set, the lower surface of the lid portion 12 expands in a direction orthogonal to the virtual axis Xn in a peripheral edge portion of the supply port 12b. That is, when a location at which the ultrasonic nozzle 31 is provided is a starting point, the lower surface of the lid portion 12 which defines the upper end of the accommodation space 10a expands in a direction away from the virtual axis Xn. The lower surface of the lid portion 12 continues being away from the virtual axis Xn until it reaches the location at which the accommodation space 10a has a maximum diameter.

As described above, in the present embodiment, the ultrasonic nozzle 31 is arranged above a location at which the discharge direction of the object to be treated is downward and the accommodation space 10a has a maximum diameter, the freezing chamber 10 has an inner wall surface that defines an upper edge of the accommodation space 10a, the distal end portion of the ultrasonic nozzle 31 protrudes from the inner wall surface, and the inner wall surface is formed so as to continue being away from the virtual axis Xn extending from the ultrasonic nozzle 31 in the discharge direction of the object to be treated from the location at which the ultrasonic nozzle 31 is provided until it reaches the location at which the accommodation space 10a has a maximum diameter.

In the ultrasonic nozzle 31 as illustrated in FIG. 2A, when a direction of an extension line extending from the discharge port 31a while keeping a flow direction of the object to be treated until reaching the discharge port 31a as the discharge direction of the object to be treated, the retention portion (flange portion 3111) vibrates in the discharge direction and also vibrates in a direction orthogonal to the discharge direction. Therefore, in the ultrasonic nozzle 31 as illustrated in FIG. 2A, a part of the particles may also be discharged in a direction close to a right angle with respect to the discharge direction of the object to be treated. In the present embodiment, it is preferable that the distal end portion of the ultrasonic nozzle 31 protrudes from the supply port 12b and the retention portion is located in the accommodation space 10a. In this case, even though the particles are discharged in a lateral direction, a moving direction of the particles is substantially parallel to the lower surface of the lid portion 12, and the particles can be prevented from adhering to the peripheral edge portion of the supply port 12b or the like. Incidentally, it is possible to prevent the particles from adhering to the peripheral edge portion of the supply port 12b by causing the distal end portion of the ultrasonic nozzle 31 to protrude from the supply port 12b, which is common not only to the ultrasonic nozzle 31 as illustrated in FIG. 2A but also to other types of ultrasonic nozzles.

The particle manufacturing device 101 of the present embodiment is common to the particle manufacturing device 100 of the first embodiment in that an organic solvent can be contained in a raw material liquid at a predetermined ratio, and in that case, the recovery device for recovering an organic solvent can be arranged.

The freezing chamber 10 of the second embodiment is common to the decompression drying chamber 50 of the particle manufacturing device 100 of the first embodiment in that the filter unit 13 is connected above the exhaust port 12a and the accommodation space 10a is exhausted by the decompression device 20 via the filter unit 13.

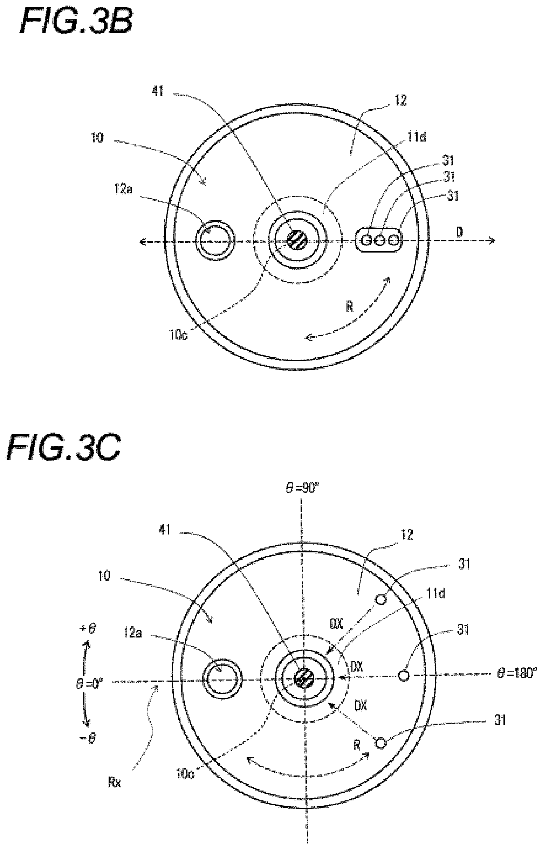

In the present embodiment, both the exhaust port 12a and the ultrasonic nozzle 31 are provided in the lid portion 12 constituting an upper portion of the freezing chamber 10. As illustrated in FIGS. 3A and 3B, the exhaust port 12a and the ultrasonic nozzle 31 are arranged separately on left and right sides of the freezing chamber 10. The exhaust port 12a and the ultrasonic nozzle 31 are arranged, for example, at positions opposite to each other with respect to a center (center axis 10c) of the freezing chamber 10 when viewed from above. The particles of the raw material liquid L are discharged downward from the ultrasonic nozzle 31, and thus a time during which the raw material liquid L can fall can be extended by providing the ultrasonic nozzle 31 in the upper portion of the freezing chamber 10. On the other hand, when a time during which the particles of the raw material liquid L drift in the accommodation space 10a of the freezing chamber 10 becomes long, the raw material liquid L may be discharged to the outside from the exhaust port 12a or may be suctioned into the filter unit 13 to cause the clogging of a filter. When the exhaust port 12a is provided below, a possibility of such a situation increases, and thus the exhaust port 12a is also provided at the upper portion of the freezing chamber 10 in the present embodiment. A distance in the horizontal direction from an end edge of the exhaust port 12a to the discharge port 31a of the ultrasonic nozzle 31 is preferably 30 cm or more, and more preferably 50 cm or more.

The ultrasonic nozzle 31 in the present embodiment is provided on the lid portion 12 such that the discharge port 31a is at a lower end. The ultrasonic nozzle 31 may be provided such that the discharge port 31a is higher than the exhaust port 12a when the freezing chamber 10 is viewed from the horizontal direction. The particle manufacturing device 100 of the present embodiment preferably includes the ultrasonic nozzle 31 having the discharge port 31a arranged at the same height as the exhaust port 12a or at a position lower than the exhaust port 12a.

When the wall surface defining the upper edge of the accommodation space 10a has a surface inclined with respect to the horizontal plane, and the exhaust port 12a is open at the inclined surface, a position in the height direction H may differ between one location and another location at an opening edge of the exhaust port 12a. In this case, the exhaust port 12a includes an uppermost portion having a highest position in the height direction H, a lowermost portion having a lowest position in the height direction H, and an intermediate portion located at a half point from the lowermost portion to the uppermost portion. In such a case, a "position of the exhaust port 12a" means the "position of the uppermost portion". In such a case, the particle manufacturing device 100 more preferably includes the ultrasonic nozzle 31 having the discharge port 31a arranged at a position lower than the intermediate portion of the exhaust port 12a. The particle manufacturing device 100 still more preferably includes the ultrasonic nozzle 31 having the discharge port 31a arranged at a position lower than the lowermost portion of the exhaust port 12a.

When the plurality of ultrasonic nozzles 31 are provided, the position in the height direction H may differ between the discharge port 31a of one ultrasonic nozzle 31 and the discharge port 31a of another ultrasonic nozzle 31 among the plurality of ultrasonic nozzles 31. In such a case, the number of ultrasonic nozzles 31 each having the discharge port 31a arranged at a position lower than the exhaust port 12a may be only one, two or more, or all. When the exhaust port 12a has the uppermost portion, the intermediate portion, and the lowermost portion, the number of ultrasonic nozzles 31 each having the discharge port 31a arranged at a position lower than the intermediate portion may be only one, two or more, or all. The number of ultrasonic nozzles 31 each having the discharge port 31a arranged at a position lower than the lowermost portion may be only one, two or more, or all.

The freezing chamber 10 of the second embodiment is common to the decompression drying chamber 50 of the first embodiment in that the main body portion 11 has a jacket portion 111, a heat transfer surface 10b for heating or cooling an accommodated object is provided in the main body portion 51, and the temperature of the accommodated frozen particles A can be adjusted.

The particle manufacturing device 101 of the second embodiment is common to that of the first embodiment in the configuration or arrangement of the stirring device 40. That is, in the particle manufacturing device 101 of the second embodiment, the stirring device 40 is provided with a rotation body that is arranged in the freezing chamber 10 and that includes the rotation shaft 41 or the stirring blade 44 as a rotation body that rotates around an axial center passing through the freezing chamber 10, and the frozen particles A accommodated in the freezing chamber 10 are stirred by the rotation of the stirring blade 44.

In the first embodiment, the frozen particles are formed from the ultrasonic nozzle 31 in the freezing chamber 10 which is a front chamber of the decompression drying chamber 50 including the rotation shaft 41 or the stirring blade 44. On the other hand, in the particle manufacturing device 101 of the second embodiment, the distal end portion of the ultrasonic nozzle 31 is located in the accommodation space 10a in which the rotation shaft 41 or the stirring blade 44 is accommodated instead of the front chamber. That is, in the particle manufacturing device 101 of the second embodiment, the ultrasonic nozzle 31 directly discharges the particles into the accommodation space 10a in which the rotation shaft 41 or the stirring blade 44 is accommodated.

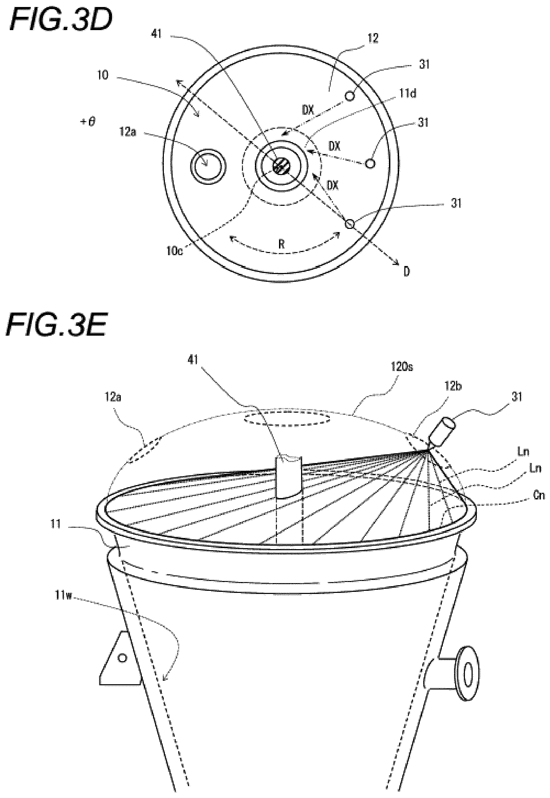

As illustrated in FIGS. 3A and 3B, in the second embodiment, the plurality of ultrasonic nozzles 31 are provided in the lid portion 12 as in the first embodiment. The plurality of ultrasonic nozzles 31 may be arranged along the radial direction D of the main body portion 11 as illustrated in FIGS. 3A and 3B, or may be arranged along a circumferential direction R of the main body portion 11 as illustrated in FIGS. 3C and 3D. As illustrated in FIG. 3C, when a virtual line Rx extending in the horizontal direction from the center of the freezing chamber 10 to a center of the exhaust port 12a is defined as a starting point, and a direction in which the virtual line Rx is rotated clockwise around the center axis 10c of the freezing chamber 10 is defined as a normal rotation direction (plus direction: +θ), the plurality of ultrasonic nozzles 31 are preferably provided within a predetermined range.

A position of the ultrasonic nozzle 31 (position of the discharge port 31a) in a top view of the freezing chamber 10 may be in a range of 90° or more and 270° or less clockwise from the position (center position) of the exhaust port 12a, may be in a range of 120° or more and 240° or less, may be in a range of 135° or more and 225° or less, or may be substantially 180°.

When the plurality of ultrasonic nozzles 31 are provided, all the ultrasonic nozzles 31 are preferably arranged within the above range. That is, when the freezing chamber 10 is viewed from the horizontal direction such that the exhaust port 12a is located at a leftmost position, the plurality of ultrasonic nozzles 31 are preferably arranged within a range from the center to a right end of the freezing chamber 10.

As described above, in the present embodiment, a cross-sectional shape of the accommodation space 10a is circular in the horizontal plane passing through the portion in which the main body portion 11 and the lid portion 12 are in contact with each other. A circle defining an outer peripheral edge of the accommodation space 10a at this portion has a maximum diameter in the cross-sectional shape of the accommodation space 10a. The ultrasonic nozzle 31 in the present embodiment is arranged above a location at which the discharge direction of the object to be treated is downward and the accommodation space 10a has a maximum diameter. The distal end portion of the ultrasonic nozzle 31 is located between the center of the lid portion 12 and the outer edge portion 120b. Therefore, a circle defining the cross-sectional shape of the accommodation space 10a at the location at which the accommodation space 10a has a maximum diameter is defined as a virtual circle Cn, and a shape drawn by a virtual line Ln extending from each point on the circumference of the virtual circle Cn to the distal end portion of the ultrasonic nozzle 31 is not a regular cone, but is an oblique cone as illustrated in FIG. 3E.

As described above, the ultrasonic nozzle 31 of the present embodiment is arranged such that the distal end portion (for example, the retention portion) protrudes from the supply port 12b. The lid portion 12 in the present embodiment preferably has a shape in which the lower surface 120s of the dome portion 120a does not intersect the oblique cone. In other words, the ultrasonic nozzle 31 preferably protrudes from the supply port 12b such that a line segment extending from the distal end portion toward each point on the virtual circle Cn is not blocked by the lid portion 12.

As described above, when the virtual line Ln is extended from the distal end portion of the ultrasonic nozzle 31 toward each point of the circle (virtual circle Cn) that defines the outer peripheral edge of the accommodation space 10a at the portion at which the accommodation space 10a has a maximum diameter, the ultrasonic nozzle 31 is arranged such that the virtual line Ln is not blocked by the lid portion 12, and the distal end portion of the ultrasonic nozzle 31 is arranged in such an open space, whereby it is possible to prevent the frozen particles A from adhering to the lid portion 12. When the particle manufacturing device 101 includes the plurality of ultrasonic nozzles 31, the number of ultrasonic nozzles 31 having the distal end portion protruding in this manner may be only one, two or more, or all.

In the present embodiment, the frozen particles A are prepared in the space in which the stirring blade 44 is arranged. In the present embodiment, it is preferable that a height of the stirring blade 44 is set to be low so that the raw material liquid L reaches the stirring blade 44 and does not adhere to the stirring blade 44 before being sufficiently frozen because the raw material liquid L is discharged in a particulate form from the ultrasonic nozzle 31 arranged in the upper portion of the freezing chamber 10. An upper end of the stirring blade 44 is preferably arranged at a position of 60% or less of a volume of the decompression drying chamber 50, and is preferably arranged at a position of 50% or less of the volume. That is, in the present embodiment, when the volume in the decompression drying chamber 50 is accumulated from a bottom portion, the upper end of the stirring blade 44 is preferably lower than a line in which a cumulative value is 60% of a total volume of the decompression drying chamber 50 or a line in which the cumulative value is 50% of the total volume. More specifically, the upper end of the stirring blade 44 is preferably provided below the discharge port 31a of the ultrasonic nozzle 31 by 30 cm or more, and more preferably 50 cm or more.

The stirring blade 44 moves largely during the operation of the stirring device 40, whereas the rotation shaft 41 only rotates around the axis, and does not change greatly from a stopped state. The frozen particles are more likely to adhere to the rotation shaft 41 located at the same place during operation than the stirring blade 44 moving around the rotation shaft 41. The frozen particles attached to the rotation shaft 41 are less likely to fall off than the frozen particles attached to the stirring blade 44. Therefore, as illustrated in FIG. 4A, when the ultrasonic nozzle 31 is arranged near the rotation shaft 41 to discharge the raw material liquid, the frozen particles may adhere to the rotation shaft 41 to form an agglomerate AB.

In the aspect illustrated in FIG. 4B, an ultrasonic nozzle for discharging the raw material liquid in a particulate form into the freezing chamber 10 discharges the raw material liquid from above to below the freezing chamber 10. The rotation shaft 41 extending in the height direction H through a central portion of the accommodation space 10a and the stirring blade 44 attached to the rotation shaft 41 are arranged in the accommodation space 10a of the freezing chamber 10 as a rotation body for stirring the frozen particles accommodated in the accommodation space 10a. A discharge direction DX of the raw material liquid from the ultrasonic nozzle 31 is a direction approaching the rotation shaft 41 as it goes below the main body portion 11. However, the ultrasonic nozzle 31 is provided such that the discharge direction DX does not intersect the rotation shaft 41. Therefore, in the aspect illustrated in FIG. 4B, the frozen particles are prevented from adhering to the rotation shaft 41. The discharge direction DX of the raw material liquid means the direction of the extension line extending from the discharge port 31a while keeping the flow direction of the raw material liquid (object to be treated) until reaching the discharge port 31a.

The discharge direction DX from the ultrasonic nozzle 31 toward the bottom portion 11d of the main body portion 11 may be set along the conical side wall surface 11w, or may be set to be parallel to the side wall surface 11w while maintaining a predetermined distance (for example, 50 mm to 300 mm). The discharge direction DX when viewed from a direction of the center axis 10c may be inward in the radial direction D (center direction) as illustrated in FIG. 3C, or may be a direction inclined with respect to the radial direction D as illustrated in FIG. 3D.

In the present embodiment, it is also conceivable that the raw material liquid L is frozen on a surface of the stirring blade 44, causing the frozen object to remain attached to the stirring blade 44. In this case, the same cleaning nozzle as that used for eliminating the clogging of the discharge port 30a may be provided to remove the frozen object adhering to the stirring blade 44. In the present embodiment, the frozen particles A can be formed not in the freezing chamber 10 but on the inside or the surface of the ultrasonic nozzle 31. In this case, after the raw material liquid L becomes the frozen particles A, the frozen particles A are discharged into the freezing chamber 10, which prevents the raw material liquid L from adhering to the stirring blade 44 or the like due to insufficient freezing of the raw material liquid L.

In the particle manufacturing device 101 of the second embodiment, the ultrasonic nozzle 31 is attached to the lid portion part 12.

In the manufacturing of the frozen particles A or the freeze-dried particles using the particle manufacturing device 101 of the second embodiment, the same method as in the first embodiment can be adopted. In the first embodiment, the frozen particles and the freeze-dried particles are manufactured in separate spaces, respectively, and in the second embodiment, the manufacturing of the frozen particles A by discharging and freezing the raw material liquid L, and the manufacturing of the freeze-dried particles by stirring and drying the frozen particles A under decompression conditions can both be executed in the accommodation space 10a of the freezing chamber 10. In the second embodiment in which the freezing of the raw material liquid L and the drying of the frozen particles A can be executed in the same space, it is easy to make the particle manufacturing device 101 smaller than the particle manufacturing device 100 of the first embodiment.

In the particle manufacturing device 101 of the second embodiment, the raw material liquid L may be discharged from the ultrasonic nozzle 31 while maintaining the freezing chamber 10 at a predetermined vacuum degree, and at a time when a predetermined amount of frozen particles A are obtained, the frozen particles A may be changed to a vacuum degree suitable for drying the frozen particles in a frozen state, and the stirring device 40 may be started to prepare the freeze-dried particles. In the second embodiment, it is not always necessary to execute the freezing and the drying in the freezing chamber 10, and for example, the frozen particles A obtained in the freezing chamber 10 may be transferred to another freeze-drying device and dried by the freeze-drying device.

In the present embodiment, the freezing and the drying can be executed only in the freezing chamber 10, and thus it is easy to automate. In the present embodiment, the movement of the frozen particles is small, and thus a foreign matter can be prevented from being mixed. Therefore, it can be said that the present embodiment is suitable for a case in which the frozen particles A or the freeze-dried particles are drug medicines. In the first embodiment, the freezing chamber 10 and the decompression drying chamber 50 are connected via the opening and closing device 60, in the present embodiment, the number of such connections can be reduced, and maintenance works such as cleaning can also be simplified.

### (Third Embodiment)

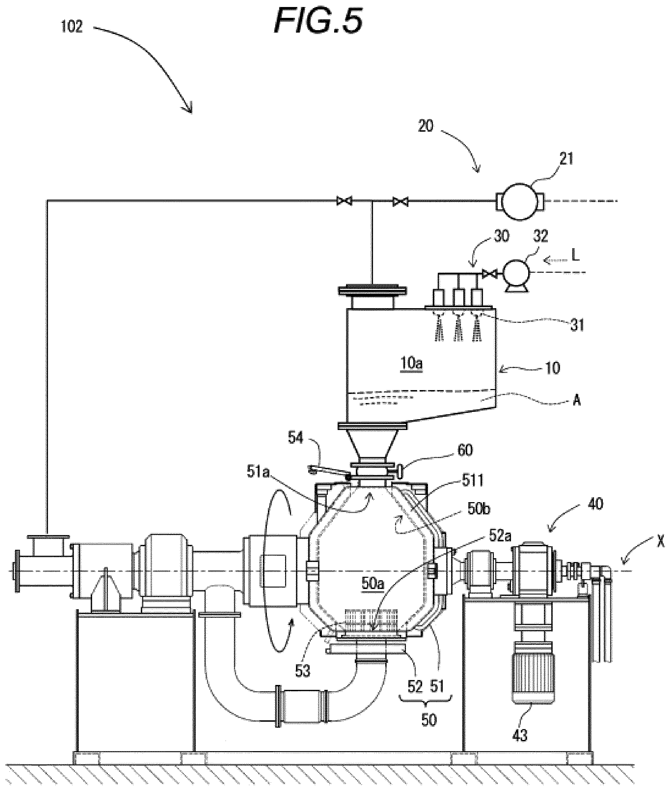

A particle manufacturing device 102 according to a third embodiment will be described below with reference to FIG. 5. In the third embodiment, a drying chamber of a conical dryer is used as the decompression drying chamber 50 of the particle manufacturing device 102. More specifically, the particle manufacturing device 102 of the third embodiment is configured such that the conical dryer is rotated in a half manner (rotating 180 degrees) so as to be switched from an upright position to a vertical position to bring the conical dryer into an inverted position, and the freezing chamber 10 is connected from above to a product discharge port facing upward.

The particle manufacturing device 102 of the third embodiment is common to the particle manufacturing device 100 of the first embodiment in that the raw material liquid L is discharged from the ultrasonic nozzle 31 into the accommodation space 10a of the freezing chamber 10 in a decompression state made by the decompression device 20 including the vacuum pump 21 to manufacture the frozen particles A. That is, in the third embodiment, a discharge port of the conical dryer serves as a supply port through which the frozen particles A are supplied to the decompression drying chamber 50, and the supply port also serves as the discharge port 51a when the drying in the decompression drying chamber 50 is completed. In the present embodiment, the freeze-dried particles can be discharged from the decompression drying chamber 50 in a state in which an opening direction of the discharge port 51a is downward, and the freeze-dried particles can be discharged by bringing the conical dryer into the upright position.

The freezing chamber 10 of the third embodiment is different from the decompression drying chamber 50 as in the first embodiment. The freezing chamber 10 is detachably attached to the decompression drying chamber 50, and the decompression drying chamber 50 of the present embodiment is provided with a bottom lid 54 for closing the discharge port 51a after the freezing chamber 10 is detached.

The particle manufacturing device 102 of the third embodiment is common to the particle manufacturing device 100 of the first embodiment in that the decompression drying chamber 50 is located below the freezing chamber 10, and is connected to the freezing chamber 10 in the up-down direction, and the decompression drying chamber 50 has the accommodation space 50a capable of receiving the frozen particles A manufactured in the freezing chamber 10.

The particle manufacturing device 102 of the third embodiment is the same as the particle manufacturing device 100 of the first embodiment in that the decompression drying chamber 50 is connected to the freezing chamber 10 via the opening and closing device 60, and when the opening and closing device 60 is in an open state, the accommodation space 50a communicates with the accommodation space 10a of the freezing chamber 10. The particle manufacturing device 102 of the third embodiment is common to the particle manufacturing device 100 of the first embodiment in that the freezing chamber 10 and the decompression drying chamber 50 can be decompressed to a predetermined vacuum degree by the vacuum pump 21 of the decompression device 20.

The particle manufacturing device 102 of the present embodiment is common to the particle manufacturing device 100 of the first embodiment in that the decompression drying chamber 50 includes the main body portion 51 and the lid portion 52, the lid portion 52 is provided with the exhaust port 52a, and the accommodation space 50a is exhausted via the filter unit 53. The particle manufacturing device 102 of the third embodiment is common to the particle manufacturing device 100 of the first embodiment in that the jacket portion 511 through which a heat medium can flow is provided in the decompression drying chamber 50 and an inner wall surface of the decompression drying chamber 50 is the heat transfer surface 50b.

In the particle manufacturing device 102 illustrated in FIG. 5, the filter unit 53 is located below when the frozen particles A are transferred from the freezing chamber 10. When at least a part of the filter of the filter unit 53 is exposed to the accommodation space 50a, the frozen particles A may be covered and clogged. Therefore, a cover material that covers the filter unit 53 exposed to the accommodation space 50a from the inside of the chamber may be provided. In order to prevent the adhesion of the frozen particles A, the cover material is preferably made of a material having a higher thermal conductivity than the filter, and is preferably made of a metal such as stainless steel. The cover material can be made of a porous sheet material having a larger mesh than the filter of the filter unit 53, and can be formed of a metal mesh or punching metal.

The particle manufacturing device 102 of the third embodiment is different from that of the first embodiment in a method of stirring frozen particles by the stirring device 40. The stirring device 40 in the present embodiment includes a pivoting device for pivoting the decompression drying chamber 50, and is configured to stir the frozen particles A accommodated in the accommodation space 50a by the rotation of the decompression drying chamber 50. The stirring device 40 in the particle manufacturing device 102 of the third embodiment includes the rotation machine 43, and is configured to cause the decompression drying chamber 50 to rotate around an axial center X passing through the accommodation space 50a in the horizontal direction.

The stirring device 40 of the present embodiment is provided with a swing machine (not illustrated) such as a slider crank capable of converting rotational motion in one direction into swing motion. The particle manufacturing device 102 of the third embodiment can stir the accommodated frozen particles A by swinging (pivoting) the decompression drying chamber 50 within a range of +90 degrees to -90 degrees in a state of being connected to the freezing chamber 10 after transferring the frozen particles A from the freezing chamber 10 to the decompression drying chamber 50, but also can cause the decompression drying chamber 50 to rotate at a predetermined rotation speed around the axial center X in a state in which the freezing chamber 10 is removed and the bottom lid 54 is closed. In the latter case, the frozen particles A can be stirred more vigorously, and the degree of stirring can be widely adjusted. On the other hand, in the latter method, a period during which a decompression state of primary dry particles is released is provided until secondary drying is performed unless the opening and closing device capable of opening and closing the discharge port 51a (supply port of the primary dry particles) of the decompression drying chamber 50 in a state of being connected to the freezing chamber 10 is provided, whereas in the former case, the drying of the frozen particles A can also be executed while maintaining the frozen particles A under the decompression conditions without such a special opening and closing device. If the freezing chamber 10 and the decompression drying chamber 50 are connected by a flexible tube, the decompression drying chamber 50 can be swung while a position of the freezing chamber 10 is fixed.

In the present embodiment, as illustrated in FIG. 5, the filter unit 53 is located inside the inner wall surface of the decompression drying chamber 50 and protrudes in a center direction of the accommodation space 50a. In the present embodiment, when the frozen particles A are manufactured, the filter unit 53 is located at a bottom portion of the decompression drying chamber 50, and thus when an amount of frozen particles A is large, the filter unit 53 may be embedded in the frozen particles A, and a load of the vacuum pump 21 may be increased at the time of decompression for forming the freeze-dried particles. Therefore, when the secondary drying is performed while the decompression drying chamber 50 is swung, it is desirable to adjust a swing angle such that at least a part of the filter unit 53 escapes from a state of being embedded in the frozen particles A and is exposed to the accommodation space 50a.

In the present embodiment, when the frozen particles A are dried while causing the decompression drying chamber 50 to rotate, the frozen particles A accommodated in the accommodation space 50a can be entirely stirred, and the drying of the frozen particles A can be promoted as compared with the first embodiment. The vacuum degree in the freezing or the drying in the present embodiment can be set as in the case of the first embodiment. When a conical dryer is used as in the third embodiment, the freezing chamber can also be used as the decompression drying chamber. Such an embodiment will be described below.

### (Fourth Embodiment)

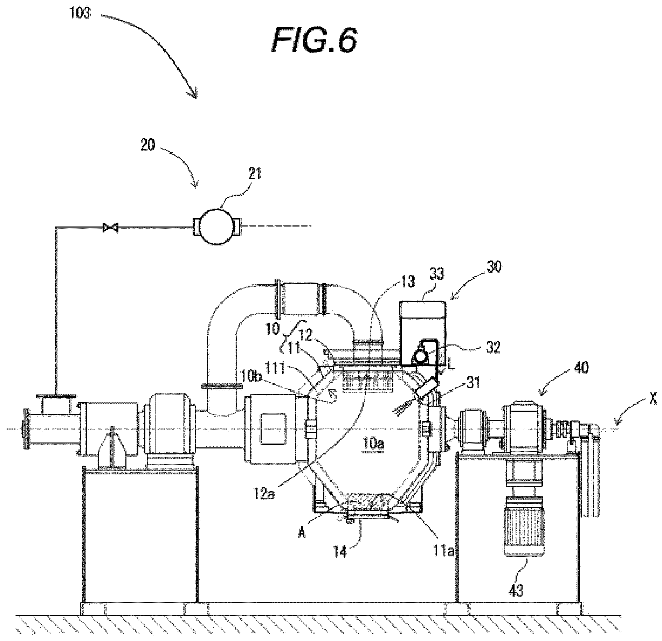

FIG. 6 illustrates the particle manufacturing device 103 of a fourth embodiment, and illustrates the particle manufacturing device 103 that utilizes a conical dryer as in the third embodiment. FIG. 6 illustrates a state in which the conical dryer is in an upright position. In the third embodiment, the drying chamber of the conical dryer is the decompression drying chamber 50 for performing freeze drying, whereas in the present embodiment, the drying chamber is the freezing chamber 10 for discharging and freezing the raw material liquid L, and the freezing chamber 10 can also dry the frozen particles A under the decompression conditions as necessary.

In the particle manufacturing device 103 of the fourth embodiment, the freezing chamber 10 includes the main body portion 11 and the lid portion 12 closing the upper opening of the main body portion 11. The lid portion 12 is provided with the exhaust port 12a, which is common to the third embodiment. The freezing chamber 10 has a discharge port 11a that can be used as an extraction port for the frozen particles A in a lower end portion, and a bottom lid 14 for opening and closing the discharge port 11a.

The freezing chamber 10 of the fourth embodiment is common to the decompression drying chamber 50 of the particle manufacturing device 102 of the third embodiment in that the filter unit 13 is provided in the exhaust port 12a, and the accommodation space 10a is exhausted by the decompression device 20 via the filter unit 13. The freezing chamber 10 of the fourth embodiment is common to the decompression drying chamber 50 of the third embodiment in that the main body portion 11 has the jacket portion 111, the heat transfer surface 10b for heating or cooling an accommodated object is provided in the main body portion 11, and the temperature of the accommodated frozen particles can be adjusted. The particle manufacturing device 103 of the fourth embodiment is common to that of the third embodiment in the configuration or arrangement of the stirring device 40.

In the particle manufacturing device 103 of the fourth embodiment, the discharge device 30 is fixed to the freezing chamber 10 and is rotatable together with the freezing chamber 10. In the particle manufacturing device 103, the filter unit 13 may be provided at a position farthest from a point at which the raw material liquid L is discharged in a particulate form from the ultrasonic nozzle 31, and the frozen particles A may be prevented from passing through the filter unit 13. That is, in the particle manufacturing device 103 of the fourth embodiment, the ultrasonic nozzle 31 and the filter unit 13 may be arranged in the freezing chamber 10 so as to be opposed to each other. In this case, a cover material (filter cover) may be provided such that a filter of the filter unit 13 is not exposed toward the ultrasonic nozzle 31. That is, the cover material can be provided to block a straight line connecting the filter and the ultrasonic nozzle 31. Similar to the filter unit 53 of the third embodiment, the cover material is preferably made of a material having a higher thermal conductivity than the filter, and is preferably made of metal such as stainless steel. The cover material can be made of a porous sheet material having a larger mesh than the filter, and can be formed of a metal mesh or punching metal.

In the particle manufacturing device 103 of the fourth embodiment, the ultrasonic nozzle 31, the pump 32 for supplying the raw material liquid L to the ultrasonic nozzle 31, and a raw material tank 33 for storing the raw material liquid L are fixed to the freezing chamber 10. As illustrated in FIG. 6, one or more ultrasonic nozzles 31 may be provided on one of left and right walls of the freezing chamber 10 when viewed from a direction orthogonal to the axial center X, which is a pivoting center or a rotation center of the freezing chamber 10. When the ultrasonic nozzles 31 are arranged in such a manner, it is possible to prevent the frozen particles A accommodated in the freezing chamber 10 from covering the discharge port 31a of the ultrasonic nozzle 31 even when the frozen particles A are stirred by causing the freezing chamber 10 to rotate while discharging the raw material liquid L, and it is also possible to prevent the discharge port 31a from being clogged and to reduce the formation of agglomerates in which the plurality of frozen particles A are collected by the discharged raw material liquid.

In the manufacturing of the frozen particles A or the freeze-dried particles using the particle manufacturing device 103 of the fourth embodiment, the same method as in the first embodiment can be adopted. In the first embodiment, the formation of the frozen particles A and the formation of the freeze-dried particles are executed in the freezing chamber 10 and the decompression drying chamber 50, which are separate chambers, respectively, and in the fourth embodiment, as in the second embodiment, the formation of frozen particles A and the formation of freeze-dried particles are executed in a single chamber that is used as both the freezing chamber 10 and the decompression drying chamber 50. In the fourth embodiment in which the formation of the frozen particles A and the formation of the freeze-dried particles can be executed in the same space, the particle manufacturing device 103 can be easily miniaturized.

In the particle manufacturing device 103 of the fourth embodiment, the raw material liquid L may be discharged from the ultrasonic nozzle 31 while maintaining the freezing chamber 10 at a predetermined vacuum degree, and at a time when a predetermined amount of frozen particles A are obtained, the frozen particles A may be changed to a vacuum degree suitable for drying the frozen particles A to prepare the freeze-dried particles. The stirring device 40 may be driven both when the frozen particles A are formed by discharging the raw material liquid L and when the frozen particles A are dried by increasing the vacuum degree, may be driven only in one of the two cases, or may not be driven in either case.

When the stirring device 40 is used in both the freezing and the freeze drying, for example, the freezing chamber 10 may be only swung at the time of freezing, and the freezing chamber 10 may be rotated at the time of freeze drying.

In the particle manufacturing device 103 of the fourth embodiment, an aspect in which an attachment position of the ultrasonic nozzle 31 is largely changed from that of the third embodiment is illustrated, and the attachment position of the ultrasonic nozzle 31 in the fourth embodiment may be the discharge port 11a, as in the third embodiment.

In the present embodiment, the discharge device 30 may be separated between the ultrasonic nozzle 31 attached to the freezing chamber 10 and equipment upstream of the ultrasonic nozzle 31 (for example, between the ultrasonic nozzle 31 and the pump 32), the raw material tank 33 or the pump 32 may be removed, and the frozen particles A may be dried by rotating the freezing chamber 10 while leaving only the ultrasonic nozzle 31 attached to the freezing chamber 10. In this case, it is possible to prevent the decompression state of the freezing chamber 10 from being released by drying the frozen particles A while the ultrasonic nozzle 31 is attached after the formation of the frozen particles A.

The frozen particles A may be dried after the ultrasonic nozzle 31 is removed from the freezing chamber 10. In this case, the frozen particles A do not cover the ultrasonic nozzle 31 during the rotation of the freezing chamber 10, and thus it is possible to more reliably prevent the clogging of the discharge port 31a of the ultrasonic nozzle 31.

In the fourth embodiment or the second embodiment, as in the first embodiment or the third embodiment, the freezing chamber for freezing the raw material liquid L and the decompression drying chamber for drying the frozen particles A may not be individually prepared, and thus the device can be made compact. In addition, in the second embodiment or the fourth embodiment, it is possible to secure a wide accommodation space for discharging the raw material liquid from the ultrasonic nozzle, and thus it is easy to prevent the frozen raw material liquid from becoming an adhering matter and adhering to an inner wall of the freezing chamber or the like.

In the second embodiment or the fourth embodiment, even if an adhering matter is generated on the wall surface of the freezing chamber or the like, the adhering matter is prompted to fall off by the stirring device stirring the frozen particles. In particular, in the fourth embodiment, the freezing chamber itself can be rotated when the frozen particles A are dried, and thus it is easy to detach the adhering matter. In the particle manufacturing device or the method for manufacturing frozen particles in the fourth embodiment, various modifications can be made without being limited to the above examples, as in the above embodiments.

The frozen particles A manufactured in the present embodiment may be particles (primary particles) in a state of being discharged in a particulate form from the ultrasonic nozzle, or may be particles (aggregated particles) in which a part or all of particles discharged from the ultrasonic nozzle are bonded to each other. The particle manufacturing device of the present embodiment may be used not only for preparing the frozen particles or the freeze-dried particles, but also for performing secondary processing. The particle manufacturing device of the present embodiment may be used, for example, to pulverize the freeze-dried particles to form refined particles, cover the frozen particles or the freeze-dried particles with a coating agent to form core-shell particles, or attach the frozen particles or the freeze-dried particles to other particles to form composite particles.

As described above, in the present embodiment, the frozen particles can be formed quickly while preventing the clogging of the nozzle, and the frozen particles can be easily prepared. The present invention is not limited to the above embodiments, and various modifications can be made. That is, the present invention is not limited to the above examples.

As described above, the present invention includes the following disclosures.

A particle manufacturing device including: a freezing chamber configured to accommodate frozen particles obtained by freezing an object to be treated containing moisture in a particulate form; an ultrasonic nozzle configured to discharge the object to be treated after or before being frozen in a particulate form into the freezing chamber; and a decompression device configured to decompress the freezing chamber, in which the moisture is evaporated due to decompression, and the frozen particles are cooled and frozen by the evaporation of the moisture.

The particle manufacturing device of the present invention has the above configuration, and thus it is possible to quickly manufacture the frozen particles while preventing the clogging of the nozzle due to the freezing. According to one aspect of the present invention, when the frozen particles are manufactured, a pressure in the freezing chamber is stabilized, and the frozen particles having a uniform size can be formed. Further, according to another aspect of the present invention, it is possible to reduce a transport power required to discharge the object to be treated from the ultrasonic nozzle.

The particle manufacturing device may include a decompression drying chamber for drying the frozen particles under a decompression environment to form freeze-dried particles, the decompression drying chamber also used as the freezing chamber or being a separate chamber from the freezing chamber, and may further include a stirring device for stirring the frozen particles, and the stirring device may be provided so as to stir the frozen particles in the freezing chamber or the decompression drying chamber. According to such a preferred aspect, the freeze-dried particles can be efficiently prepared using the frozen particles.

The particle manufacturing device is configured such that the stirring device includes a pivoting device that pivots the freezing chamber, and the frozen particles accommodated in the freezing chamber can be stirred by the pivoting of the freezing chamber, and the freezing chamber may also be used as the decompression drying chamber, so that the frozen particles can be stirred while the frozen particles are formed, and the frozen particles can be dried while the frozen particles are stirred. According to such a preferred aspect, not only space saving can be achieved, but also the freeze-dried particles can be efficiently prepared using the frozen particles. Further, according to such a preferred aspect, the space saving is possible, and thus it is also possible to secure a wider space for the freezing chamber, and it is possible to prevent the discharged raw material liquid from adhering inside the freezing chamber.

The particle manufacturing device may include the decompression drying chamber which is a separate chamber from the freezing chamber, the stirring device may include a pivoting device that pivots the decompression drying chamber, and the frozen particles accommodated in the decompression drying chamber may be stirred by the pivoting of the decompression drying chamber. According to such a preferred aspect, the freezing chamber and the decompression drying chamber have different configurations, and thus an application range of a processing process is widened. For example, in such a preferred aspect, it is also possible to adopt a processing process in which next frozen particles are prepared in the freezing chamber while the frozen particles prepared in the freezing chamber are transferred to the decompression drying chamber and dried in the decompression drying chamber.

The particle manufacturing device is configured such that the stirring device includes a rotation body that rotates in the freezing chamber around an axial center passing through the freezing chamber, and the frozen particles accommodated in the freezing chamber can be stirred by the rotation of the rotation body, and the freezing chamber may also be used as the decompression drying chamber, so that the frozen particles can be stirred while the frozen particles are formed, and the frozen particles can be dried while the frozen particles are stirred. According to such a preferred aspect, not only space saving can be achieved, but also the freeze-dried particles can be efficiently prepared using the frozen particles. Further, according to such a preferred aspect, the space saving is possible, and thus it is also possible to secure a wider space for the freezing chamber, and it is possible to prevent the discharged raw material liquid from adhering inside the freezing chamber.

The particle manufacturing device may include the decompression drying chamber which is a separate chamber from the freezing chamber, the stirring device may include a rotation body that rotates in the decompression drying chamber around an axial center passing through the decompression drying chamber, and the frozen particles accommodated in the decompression drying chamber may be stirred by the rotation of the rotation body. According to such a preferred aspect, not only space saving can be achieved, but also the freeze-dried particles can be efficiently prepared using the frozen particles. Further, according to such a preferred aspect, the space saving is possible, and thus it is also possible to secure a wider space for the freezing chamber, and it is possible to prevent the injected and discharged raw material liquid from adhering inside the freezing chamber.

The particle manufacturing device further includes: a temperature adjustment device configured to heat or cool the object to be treated to be discharged from the ultrasonic nozzle while the object to be treated passes through the ultrasonic nozzle. According to such a preferred aspect, it is possible to further prevent the clogging due to the freezing.

In the particle manufacturing device, the object to be treated may further contain an organic solvent having a freezing point and a boiling point lower than those of water. According to such a preferred aspect, agglomerates of the frozen particles can be reduced, and the frozen particles having a uniform size can be stably prepared.

In the particle manufacturing device, the freezing chamber may be provided with an exhaust port for evacuating the freezing chamber to bring the inside of the freezing chamber into a decompression state, and the ultrasonic nozzle and the exhaust port may be arranged at an upper portion of the freezing chamber. According to such an aspect, it is possible to prevent the frozen particles from being discharged to the outside of the device in an unintended form.

In the particle manufacturing device, the ultrasonic nozzle and the exhaust port may be arranged away from each other at positions opposite to each other with respect to a center of the freezing chamber. According to such an aspect, it is possible to further prevent the frozen particles from being discharged to the outside of the device in an unintended form.

A method for manufacturing frozen particles obtained by freezing an object to be treated in a particulate form through executing: a step of decompressing an object to be treated containing moisture, and cooling and freezing the object to be treated by evaporation of the moisture; and a step of forming the object to be treated after being frozen or the object to be treated before being frozen in a particulate form by an ultrasonic nozzle.

According to the present invention, the frozen particles can be efficiently prepared.

The method for manufacturing frozen particles may further execute a drying step of drying the frozen particles under a decompression environment, and in the drying step, the frozen particles may be stirred in a decompression space. According to such a preferred aspect, not only the frozen particles are efficiently prepared, but also the freeze-dried particles can be efficiently manufactured.

The object to be treated may further contain an organic solvent having a freezing point and a boiling point lower than those of water. According to the manufacturing method in such a preferred aspect, agglomerates of the frozen particles can be reduced, and the frozen particles or the freeze-dried particles having a uniform size can be stably prepared.

As described above, according to the present disclosure, it is possible to provide a particle manufacturing device and a method for manufacturing frozen particles capable of quickly manufacturing frozen particles while reducing clogging of a nozzle due to freezing.

### REFERENCE SIGNS LIST

10: freezing chamber
20: decompression device
30: discharge device
31: ultrasonic nozzle
40: stirring device
44: stirring blade
50: decompression drying chamber
100, 101, 102, 103: particle manufacturing device

## Claims

1. A particle manufacturing device comprising:
a freezing chamber configured to accommodate frozen particles obtained by freezing an object to be treated containing moisture in a particulate form;
a decompression device configured to decompress the freezing chamber; and
an ultrasonic nozzle configured to discharge the object to be treated in a particulate form into the freezing chamber decompressed by the decompression device, wherein
the frozen particles are manufactured by freezing the object to be treated as a result of cooling caused by evaporation of the moisture from the object to be treated under a decompression environment.

2. The particle manufacturing device according to claim 1,
wherein the freezing chamber is used to dry the frozen particles under the decompression environment to form freeze-dried particles, and
the particle manufacturing device further comprises a stirring device configured to stir the frozen particles in the freezing chamber.

3. The particle manufacturing device according to claim 1, comprising:
the freezing chamber;
a decompression drying chamber configured to dry the frozen particles obtained in the freezing chamber under a decompression environment to form freeze-dried particles; and
a stirring device configured to stir the frozen particles in the decompression drying chamber.

4. The particle manufacturing device according to claim 2, wherein
the stirring device includes a pivoting device configured to pivot the freezing chamber so that the frozen particles accommodated in the freezing chamber are stirred by pivoting the freezing chamber.

5. The particle manufacturing device according to claim 3, wherein
the stirring device includes a pivoting device configured to pivot the decompression drying chamber so that the frozen particles accommodated in the decompression drying chamber are stirred by pivoting the decompression drying chamber.

6. The particle manufacturing device according to claim 2, wherein
the stirring device includes a rotation body that rotates in the freezing chamber around an axial center passing through the freezing chamber so that the frozen particles accommodated in the freezing chamber are stirred by rotation of the rotation body.

7. The particle manufacturing device according to claim 3, wherein
the stirring device includes a rotation body that rotates in the decompression drying chamber around an axial center passing through the decompression drying chamber so that the frozen particles accommodated in the decompression drying chamber are stirred by rotation of the rotation body.

8. The particle manufacturing device according to any one of claims 1 to 7, further comprising:
a temperature adjustment device configured to heat or cool the object to be treated to be discharged from the ultrasonic nozzle while the object to be treated passes through the ultrasonic nozzle.

9. The particle manufacturing device according to any one of claims 1 to 8, wherein the object to be treated further contains an organic solvent, and
the organic solvent has a lower freezing point and a lower boiling point than water.

10. The particle manufacturing device according to claim 1, wherein
the freezing chamber is provided with an exhaust port for evacuating the freezing chamber to bring the inside of the freezing chamber into a decompression state, and
the ultrasonic nozzle and the exhaust port are arranged at an upper portion of the freezing chamber.

11. The particle manufacturing device according to claim 10, wherein
the ultrasonic nozzle and the exhaust port are arranged at positions opposite to each other with respect to a center of the freezing chamber.

12. A method for manufacturing frozen particles comprising:
forming an object to be treated containing moisture into a particulate form by an ultrasonic nozzle; and
manufacturing frozen particles, in which the object to be treated is frozen in a particle form, by freezing the object to be treated before the forming of the object to be treated into the particulate form by the ultrasonic nozzle or after the forming of the object to be treated into the particulate form by the ultrasonic nozzle, wherein
the freezing of the object to be treated is achieved by cooling the object to be treated, the cooling being caused by evaporating the moisture.

13. The method for manufacturing frozen particles according to claim 12, further comprising:
drying the frozen particles under a decompression environment, wherein
in the drying, the frozen particles are stirred in a decompressed space.

14. The method for manufacturing frozen particles according to claim 12 or 13, wherein
the object to be treated further comprises an organic solvent, and the organic solvent has a lower freezing point and a lower boiling point than water.
